(19) **Europäisches Patentamt / European Patent Office / Office européen des brevets**

(11) **EP 0 998 074 B1**

(12) **EUROPEAN PATENT SPECIFICATION**

(45) Date of publication and mention
of the grant of the patent:
**19.05.2010 Bulletin 2010/20**

(51) Int Cl.:
***H04L 9/32*** (2006.01)

(21) Application number: **99121598.9**

(22) Date of filing: **29.10.1999**

(54) **Method of digital signature, and secret information management method and system**

Verfahren zur digitalen Unterschrift und Verfahren und Vorrichtung zur Verwaltung einer Geheiminformation

Procédé de signature numérique ainsi que procédé et système de gestion d'une information secrète

(84) Designated Contracting States:
**DE FR GB**

(30) Priority: **30.10.1998 JP 30993698**
**27.08.1999 JP 24190599**

(43) Date of publication of application:
**03.05.2000 Bulletin 2000/18**

(73) Proprietor: **Hitachi, Ltd.**
**Chiyoda-ku,**
**Tokyo 101-8010 (JP)**

(72) Inventors:
• **Miyazaki, Kunihiko**
**Yokohama-shi,**
**Kanagawa-ken (JP)**

• **Takaragi, Kazuo**
**Ebina-shi,**
**Kanagawa-ken (JP)**

(74) Representative: **Strehl Schübel-Hopf & Partner**
**Maximilianstrasse 54**
**80538 München (DE)**

(56) References cited:
• **PARK C ET AL: "NEW ELGAMAL TYPE THRESHOLD DIGITAL SIGNATURE SCHEME" IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, vol. E79-A, no. 1, 1996, pages 86-93, XP000558723 ISSN: 0916-8508**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a technique for ensuring security of secret information.

2. Description of Related Art

As techniques for enabling high-degree application of a network, such as distribution of multimedia data through a network, ones attracting attention are digital signature, which is a technique for giving a function corresponding to a conventional signature stamp to digitized multimedia data such as an electronic document, public key cryptography, which is a technique for protecting such multimedia data from eavesdropping, and the like.

The references of the digital signature technique include the following, for example.

Reference 1: "Standard Specifications For Public Key Cryptography (Draft Version 4)", IEEE P1363 Standard, IEEE, June 16, 1998.

Reference 2: M. Michels, D. Naccache and H. Petersen, "GOST 34.10 - A brief overview of Russia's DSA", Computers and Security, 15(8), pp. 725 - 732 (1996).

In the digital signature technique described in the above References 1 and 2, a private key owned secretly by oneself and numerical information such as a random number generated by himself are made to act on a message M as an object of signature, in order to generate a digital signature A for the message M. Then, by making the message M and a public key, which pairs with the above private key, act on the digital signature A, it is possible to verify the digital signature A. Thus, when the private key is known to a third person without the legitimate authority, there is some possibility of illegal use of the digital signature.

As portable computers such as PDA (Personal Digital Assistants), IC cards, and the like come into wide use, it is expected that theft and loss of computers will increase in the future. Thus, there is increasing possibility that a computer containing a private key is used by a third person without the legitimate authority so as to generate digital signature illegally. On the other hand, when a person having the authority loses his own private key because of loss, theft, failure, or the like of a computer containing that private key, he becomes unable to sign until a private key is newly issued by a legitimate organization such as an IC card issuing agent. This is a great problem in electronic commerce that requires immediacy.

Accordingly, as a technique for solving those problems, there is proposed a technique in which private key is managed in such a decentralized manner that pieces of numerical information (private-key generating information) are given in advance to persons of an arbitrary number n respectively, so that the private key can be generated by using the pieces of the numerical information owned by k (k < n) persons out of n. And, as a technique for generating digital signature using such a decentralized key management technique, there is proposed a so-called threshold digital signature. References of the threshold digital signature include the following, for example.

Reference 3: C. Park, and K. Kurosawa, "New ElGamal Type Threshold Digital Signature Scheme" IEICE Trans. Fundamentals, E79-A(1): 86 - 93, January 1996.

In the threshold digital signature technique described in the above Reference 3, pieces of numerical information (private-key generating information) are given in advance to n signature generating persons. Those pieces of numerical information are such ones that, by using the numerical information owned by k (k < n) persons out of the n persons, it is possible to generate a private key. At the time of generating a signature, each member of k signature generating persons generates a random number, distributes this random number into k pieces of numerical information (random number generating information), retains one of them, and gives the remaining (k - 1) pieces respectively to the other signature generating persons (k - 1 persons) out of k signature generating persons. As a result of this, each of the k signature generating persons has one piece of private-key generating information and k pieces of random number generating information. Then, each of the k signature generating persons makes one piece of private-key generating information and k pieces of random number generating information owned by himself act on a message M, in order to generate a partial signature on the message M. By carrying out a prescribed arithmetic operation on these k partial signatures, a digital signature using the private key for the message M is generated. This signature is called a k-out-of-n threshold digital signature, since the signature can be carried out when k persons group together out of the n signature generating persons.

Further, references of the public key cryptography include the following, for example.

Reference 4: Bruce Schneier, "Applied Cryptography, Second Edition", John Wiley & Sons, Inc., 1996.

In the public key cryptography described in the above Reference 4, it is noted that processing takes a lot of time for directly encrypting a message as an object of encryption using a public key and decrypting the resultant encrypted message using a private key. Thus, at the time of encryption, a common key is used first to encrypt a message, and then, that common key is encrypted by a public key. At the time of decryption, first the encrypted common key is decrypted using a private key, and then, the common key obtained as a result is used to decrypt the encrypted message.

## SUMMARY OF THE INVENTION

The threshold signature technique and the decentralized key management technique described in Reference 3, and the public key cryptography described in Reference 4 have the following problems.

(1) Problems of the threshold signature technique and the decentralized key management technique

(i) Problems of the threshold signature technique described in Reference 3

In the threshold signature technique described in the above Reference 3, each of k members going to generate a digital signature out of n signature generating persons must generate a random number, distribute this random number into k pieces of numerical information (random number generating information), retain one of them, and give the remaining (k - 1) pieces to the other (k - 1) members. At that time, if the values of the random numbers generated respectively by the k members become known, it is possible that the private key is known from the message M, the digital signature on the message M, and the public key that pairs with the private key in question used in generating that signature. By this reason, in the signature generating process, secret communication among the k signature generating persons is required for distribution and retention of the random number generating information regarding a random number generated by each member. Thus, the processing becomes complex and quantity of communication becomes so large that the processing takes time.

(ii) Problems of the decentralized key management technique including the threshold signature technique described in Reference 3

In the decentralized key management technique including the threshold signature technique described in Reference 3, it is possible to generate a digital signature (or a private key) when any k persons group together out of the n persons. In other words, each of the n persons has the same authority and can generate a digital signature (or a private key) in cooperation with any k - 1 persons out of the n persons.

However, in an actual organization such as a company, usually its member's range of authority varies according to his position. For example, a subordinate can not sign without permission of his boss, while a boss can sign by himself. The decentralized key management technique including the threshold signature technique described in the above Reference 3 does not take such a fact into consideration at all.

Further, these techniques realize the k-out-of-n threshold digital signature, in which n persons are given in advance respectively with such pieces of numerical information (private-key generating information) that a private key can be generated using the numerical information owned by k (k < n) persons, and thus, any group of k persons out of n can generate a digital signature (or a private key). Thus, even when some persons lose their private-key generating information by some reason, a digital signature (or a private key) can be generated if, out of the n persons, k or more persons retain their private-key generating information. However, when the number of persons retaining the private-key generating information is less than k, it is impossible to generate a digital signature (or a private key) any more. And, again, such pieces of numerical information (private-key generating information) that a new private key can be generated using the numerical information owned by k (k < n) persons out of n should be given to the n persons respectively, before it is possible to generate a digital signature (or a private key).

(2) Problems of the public key cryptography

In the public key cryptography described in the above Reference 4, an encrypting party needs to send a decrypting party an encrypted common key in addition to an encrypted message. When a digital signature is added to the message in question, it is necessary to send the encrypted message, the encrypted common key, and the digital signature. Thus, quantity of communication becomes large and the processing takes much time.

The present invention has been made taking the above situation into consideration. An object of the present invention is to provide a digital signature technique and a decentralized key management technique that are more convenient.

In detail, the present invention provides a threshold signature technique that does not require secret communication in signature generating process.

Further, an example provides a digital signature technique in which, when a message is encrypted using the public key cryptography and sent to the other party together with a digital signature of the message in question, it is not necessary to encrypt the common key, which is used for encrypting the message, with a public key, and to send the encrypted common key to that party separately.

Further, an example provides a decentralized secret information management technique that can weight each person in accordance with his authority so that the number of persons required to cooperate for recovery of the secret information varies.

Further, an example provides a decentralized secret information management technique that can manage private-key generating information without causing a period in which generation of a digital signature or a private key is impossible.

To attain the above-described objects, a mode of the present invention provides a method of generating a digital signature, for generating a digital signature A that uses a private key d for a message M, wherein:

k pieces of numerical information $u_1$ - $u_k$ satisfying $d = f1(u_1, u_2, ..., u_k)$ are distributed into and retained by k computers; with regard to each computer of said k computers, a piece of the numerical information $u_i$ ($1 \leq i \leq k$) retained by itself, a random number $s_i$ generated by itself, and information obtained from pieces of numerical information generated respectively by the other computers are made to act on the message M, by said each computer, to generate a partial signature $a_i$ on the message M; and

partial signatures $a_1$ - $a_k$ generated respectively by said k computers are used to generate the digital signature A that uses the private key d for the message M.

For example, when the k pieces of numerical information $u_1$ - $u_k$ satisfying $d = u_1 + u_2 + ... + u_k$ are distributed into and retained by the k computers, the digital signature A on the message M is generated as follows.

A. A case in which ElGamal type method is used for generating a signature

1. Processing in a computer i ($1 \leq i \leq k$)

(1) A random number $s_i$ is generated, to calculate Ri satisfying:

$$\mathtt{Ri\ =\ s_i \cdot P}$$

where P is a base point.

(2) Using the random number $s_i$ and a sum total $\Sigma R$ of R1 - Rk calculated in the other computers (thus, except Ri generated by itself), x satisfying a point on the elliptic curve:

$$\mathtt{(x,\ y)\ =\ s_i \cdot P\ +\ \Sigma R}$$

$\Sigma R$ is calculated.

(3) Using the above-mentioned x, the random number $s_i$ generated by itself, the private-key generating information $u_i$ retained by itself, and a hash value h of the message M, ti satisfying:

$$\mathtt{ti\ =\ (u_i \cdot x\ +\ s_i \cdot h)\ \ (mod\ N)}$$

where N is an order of P
is calculated, and x and ti are used as a partial signature $a_i$ on the message M.

2. Processing in any of k computers 1 - k, or another computer

(1) Using t1 - tk calculated respectively in the computers 1 - k, t satisfying:

$$t = (t1 + \ldots + tk) \pmod{N}$$

is calculated.
(2) The calculated t and x calculated in each of the computers 1 - k are outputted as (t, x).
Thus-obtained (t, x) satisfies:

$$x = x \text{ coordinate of } ((s_1 + \ldots + s_k) \cdot P)$$

$$t = (d \cdot x + (s_1 + \ldots + s_k) \cdot h) \pmod{N}.$$

Accordingly, (t, x) can be used as the digital signature A on the message M.

B. A case in which a Nyberg-Rueppel type method is used for generating a signature

1. Processing in a computer i ($1 \leq i \leq k$)

(1) A random number $s_i$ is generated to calculate Ri satisfying:

$$Ri = s_i \cdot P$$

where P is a base point.
(2) Using the random number $s_i$ and a sum total $\Sigma R$ of R1 - Rk calculated in the other computers (thus, except Ri generated by itself), x satisfying a point on the elliptic curve:

$$(x, y) = s_i \cdot P + \Sigma R$$

is calculated.
(3) Using the above-mentioned x, the random number $s_i$ generated by itself, the private-key generating information $u_i$ retained by itself, and a hash value h of the message M, r and ti satisfying:

$$r = (x + h) \pmod{N}$$

$$ti = (s_i + u_i \cdot r) \pmod{N}$$

where N is an order of P
is calculated, and r and ti are used as a partial signature $a_i$ on the message M.

2. Processing in any of k computers 1 - k, or another computer

(1) Using t1 - tk calculated respectively in the computers 1 - k, t satisfying:

$$t = (t1 + ... + tk) \pmod N$$

is calculated.

(2) The calculated t and r calculated in each of the computers 1 - k are outputted as (t, r).

Thus-obtained (t, r) satisfies:

$$r = ((x \text{ coordinate of } ((s_1 + ... + s_k) \cdot P)) + h) \pmod N$$

$$t = ((s_i + ... + s_k) + d \cdot r) \pmod N.$$

Accordingly, (t, r) can be used as the digital signature A on the message M.

Here, it is assumed that the numerical information $s_i$ generated by each computer by itself is such information that, even when it is opened to others than the computers of the group to which the computer that generated it belongs, it is impossible to obtain the private key d using the message M, a public key Q paring with the private key d, and the digital signature A.

Further, as the k computers, any k computers out of n computers may be selected. Namely, the private key d may be decentralizedly managed by each of the n computers so that it is possible to generate the private key d using pieces of numeric information $u_1$ -$u_k$ owned by k computers out of the n computers. In detail, for every combinations of k out of n, k pieces of numerical information $u_1$ - $u_k$ satisfying $d = f1(u_1, u_2, ..., u_k)$ are distributed into and retained by k computers within the group defined by the combination in question. With regard to each computer of k computers of each group, a piece of numerical information $u_1$ - $u_k$ ($1 \leq i \leq k$) retained by itself, a piece of numerical information $s_i$ generated by itself, and pieces of numerical information generated by the other computers by themselves, which belongs to the same group, are made to act on the message M, by said each computer, to generate a partial signature $a_i$ on the message M. Then, using partial signatures $a_1$ - $a_k$ generated respectively by k computers belonging to the same group, the digital signature A that uses the private key d for the message M is generated.

According to the present mode, it is not necessary that a piece of numerical information $s_i$ generated by each computer itself of the k computers is distributed to and retained by the other k - 1 computers. Thus, in the process of generating a signature, it is not necessary to perform secret communication between the k computers, to make the numerical information generated by each computer itself be distributed and retained by the k computers. Thus, processing can be simplified, and quantity of communication can be reduced, making quick processing possible.

Further, the present mode may be modified to provide a method in which:

j pieces of numerical information $u'_1$ - $u'_j$ satisfying $d = f2(u'_1, u'_2, ..., u'_j)$ are distributed to and retained by j computers different in combination from said k computers;
with regard to each computer of said j computers, a piece of numerical information $u'_i$ ($1 \leq i \leq j$) retained by itself, a piece of numerical information $s_i$ generated by itself, and information obtained from pieces of numerical information generated respectively by said j computers except itself, are made to act on the message M, by said each computer, to generate a partial signature $a'_i$; and
the partial signatures $a'_1$ - $a'_j$ generated by said j computers are used to generate the digital signature A that uses the private key d for the message M.

Further, in the present mode, the k pieces of numerical information $u_1$ - $u_k$ satisfying $d = f1(u_1, u_2, ..., u_k)$ may be generated by a computer that is different from said k computers that retain said k pieces of numerical information distributed into those k computers. Or, said k pieces of numerical information $u_1$ - $u_k$ may be generated by said k computers in cooperation with each other.

Further, an example provides a method of generating a digital signature A that uses a private key d on a message M, wherein:

a common key is generated by using information used for generating the digital signature A, and by using a public key Q' pairing with a private key d' owned by a destination of the message M, and
the generated common key is used to encrypt the message M, so that a cryptogram of the message M is generated together with the digital signature A on said message M.

Further, it provides a method of verifying a digital signature A generated as above, the verification being performed using a public key Q pairing with said private key d, wherein:

said common key is generated by using information used for verifying the digital signature A and by using said private key d'; and the generated common key is used to decrypt the cryptogram of the message M, thereby obtaining the message M at the same time with the verification of the digital signature A on the message M.

For example, when the elliptic curve cryptography is used as the public key cryptography, the cryptogram of the message M can be generated at the same time with the digital signature A on that message M, as follows:

(1) A random number k is generated, and (x, y) satisfying:

$$(x, y) = k \cdot P$$

where P is a base point
is calculated.

(2) A hash value h of the message M is obtained, and, by using the private key d for generating a signature, s satisfying:

$$s = (d \cdot x + k \cdot h) \pmod{N}$$

where N is an order of P
is calculated.

(3) Using the public key Q' for encryption, (x', y') satisfying:

$$(x', y') = k \cdot Q'$$

is calculated.

(4) The message M is encrypted, using x' as a common key. Then, together with the encrypted message M, (x, s) is outputted as the digital signature A on the message M (the hash value of M).

On the other hand, decryption of the cryptogram of the message M, generated as described above, can be performed at the same time with verification of the digital signature A, as follows.

(5) A point R whose x coordinate is x is selected.

(6) Using the private key d' pairing with the public key Q', (x', y') satisfying:

$$(x', y') = d' \cdot R$$

is calculated (here, x' becomes equal to x' calculated in the above (3)). Then, the calculated x' is used as a common key for decryption of the encrypted message M.

(7) The hash value h of the decrypted message M is obtained, and then, using the public key Q for verifying a signature, that pairs with the private key d, (x'', y'') satisfying:

$$(x'', y'') = s^{-1} \cdot x \cdot P + s^{-1} \cdot h \cdot Q$$

is calculated. Then, by examining if the obtained x'' coincides with x, the digital signature A is verified.

According to the present example, the common key used for encrypting the message, which is an object of the digital signature A, is generated by using the information used for generating the digital signature A and by using the public key Q' pairing with the private key d' owned by the destination of the message M. On the other hand, the common key used for decrypting the encrypted message (that common key is same as the common key used for encrypting the message) is generated by using the information used for verifying the digital signature and by using the above-mentioned private key d'. Thus, according to the present example, in encrypting a message using the public key cryptography and sending the encrypted message together with a digital signature of that message to the destination, it is not necessary to use a public key to encrypt the common key used for encrypting the message, to send it separately to the destination. Thus, quantity of communication can be reduced, and quick processing can be realized.

Further, an example provides a method of decentralizedly managing secret information d, wherein:

k pieces of numerical information $u_1$ - $u_k$ satisfying $d = f1(u_1, u_2, ..., u_k)$ are distributed into and retained by k computers out of n computers, and at the same time, distributed into and retained by m (m < k) computers out of the n computers, said m computers being not included in said k computers.

By this, it is possible to weight computers so that the number of computers required to cooperate for recovering the secret information d varies depending on authorities of those computers or users of those computers.

Further, an example provides a method of decentralizedly managing a secret information d, wherein:

k pieces of numerical information $u_1$ - $u_k$ satisfying $d = f1(u_1, u_2, ..., u_k)$ are distributed into and retained by k computers, and at the same time, at least one $u_i$ ($1 \leq i \leq k$) out of said k pieces of numerical information $u_1$ - $u_k$ is divided into j pieces of numerical information $u'_1$ - $u'_j$ satisfying $u_i = f2(u'_1, u'_2, ..., u'_j)$, so that said j pieces of numerical information are distributed into and retained by j computers.

By this, the computers having the numerical information $u_1$ - $u_k$ can cooperate with each other to recover the secret information d. On the other hand, the computers having the numerical information $u'_1$ - $u'_j$ first cooperate with each other to recover the numerical information $u_i$, and then, cooperate with the computers having the numerical information $u_1$ - $u_k$ (excepting $u_i$) to recover the secret information d. Thus, it is possible to weight computers so that the number of computers required to cooperate for recovering the secret information d varies depending on authorities of those computers or users of those computers.

Further, an example provides a method of decentralizedly managing a secret information d, in which each of n computers decentralizedly manages the secret information d so that the secret information can be generated by using numerical information owned by k computers out of the n computers, wherein:

a number c of computers that retain respectively damaged pieces of numerical information is counted, and when c becomes more than or equal to a prescribed value t (k < t < n), an instruction to update the secret information d is given.

Here, a computer that count the number c of the computers that retain the damaged numerical information, and gives an instruction of updating the secret information d may be any of the n computers, or another computer.

According to the present example, when the number of the pieces of numerical information for recovering the secret information d becomes less than the number of the pieces of the numerical information required for recovering the secret information, it is possible to prompt the users to update the secret information. Accordingly, it is possible, for example, to perform decentralized management of secret information not to produce a period in which it is impossible to generate a digital signature or a private key.

BRIEF DESCRIPTION OF THE DRAWINGS

The present invention will be more apparent from the following detailed description, when taken in conjunction with the accompanying drawings, in which:

Fig. 1 is a schematic configuration of a system to which an embodiment of the present invention is applied;
Fig. 2 is a schematic configuration of a cardholder's IC card used in the system shown in Fig. 1;
Fig. 3 is a schematic configuration of a merchant's IC card used in the system shown in Fig. 1;
Fig. 4 is a flowchart showing a flow of processing performed by a key generating program PROG1_1014 in the first embodiment of the present invention;
Fig. 5 is a flowchart showing a flow of processing performed by a key generating program PROG2_1015 in an embodiment of the present invention;
Fig. 6 is a flowchart showing a flow of processing performed by a key generating program PROG3_1016 in an embodiment of the present invention;
Fig. 7 is a flowchart showing a flow of processing performed by a signature generating/encrypting program PROG4_1017 in an embodiment of the present invention;

Fig. 8 is a flowchart showing a flow of processing performed by a signature generating/encrypting program PROG5_1018 in an embodiment of the present invention;

Fig. 9 is a flowchart showing a flow of processing performed by a signature generating/encrypting program PROG6_1019 in an embodiment of the present invention;

Fig. 10 is a flowchart showing a flow of processing performed by a decrypting program PROG7_1080 in anembodiment of the present invention;

Fig. 11 is a flowchart showing a flow of processing performed by a decrypting program PROG8_1081 in an embodiment of the present invention;

Fig. 12 is a flowchart showing a flow of processing performed by a signature verifying program PROG9_1082 in an embodiment of the present invention;

Fig. 13 is a schematic configuration of an example of a system and

Fig. 14 is a flowchart for explaining recovery processing of a private key d in the example.

DETAILED DESCRIPTION OF THE PREFERRED EMBODIMENTS

In the following, an embodiment of the present invention will be described.

An embodiment of the present invention will be described, taking a case of its application to transmission and reception of a message in electronic commerce.

The present embodiment is so constructed that encryption of a message and a signature on that message are possible when two or more exist out of one computer and two IC cards, i.e., three computers in total, owned by a sender of the message. Further, it is so constructed that decryption of the encrypted message and verification of the signature on that message are possible when two or more exist out of one computer and two IC cards, i.e., three computers in total, owned by a receiver of the message.

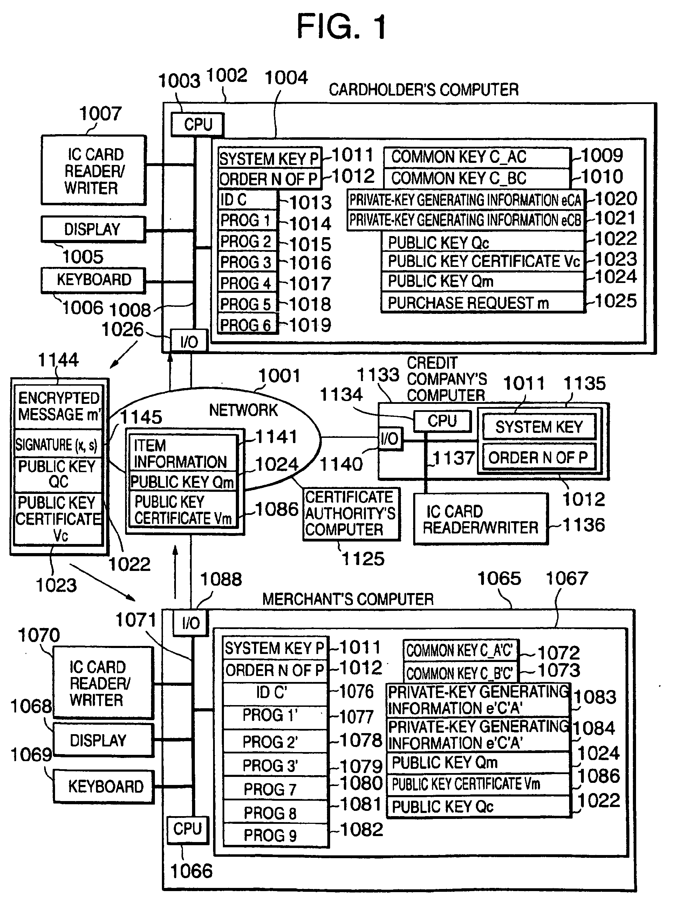

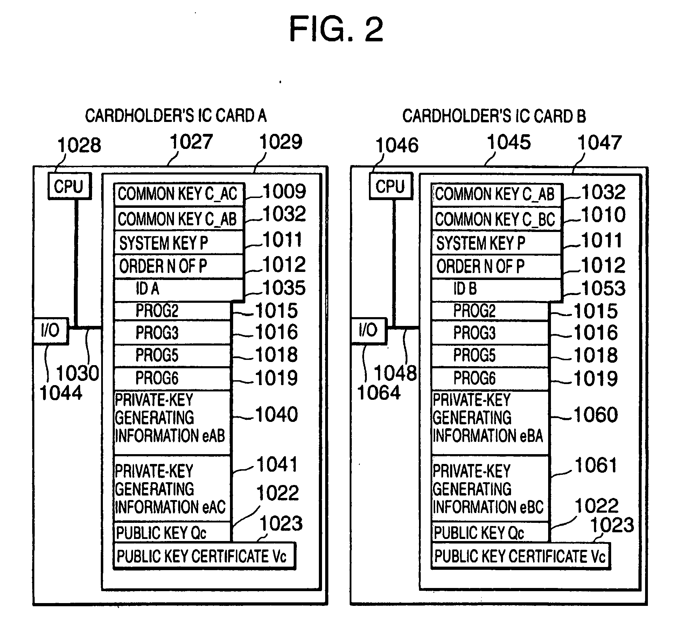

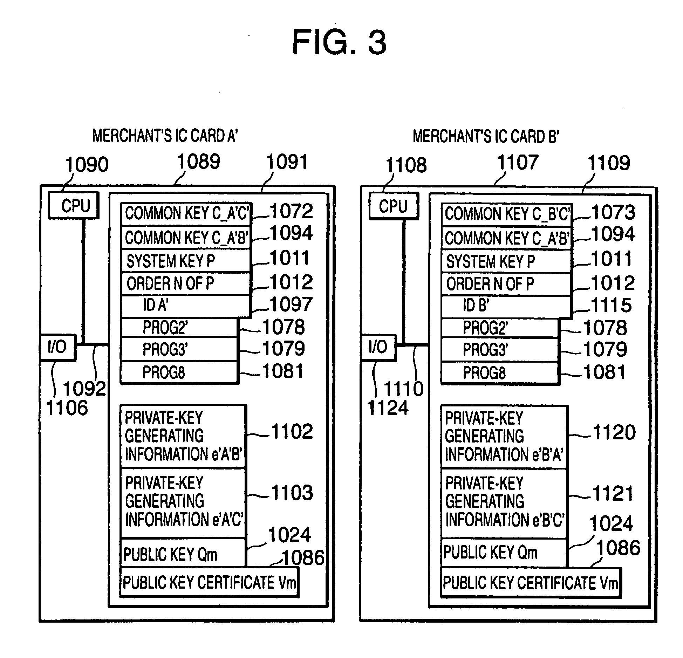

Fig. 1 is a schematic configuration of a system to which an embodiment of the present invention is applied. Further, Figs. 2 and 3 are schematic configurations of IC cards used in the system shown in Fig. 1. In these figures, same reference numerals refer to elements of same functions.

As shown in Fig. 1, the system of the present embodiment comprises a computer 1002 of a cardholder as an ordinary consumer, a computer 1065 of a merchant as a seller, a computer 1133 of a credit company, and a computer 1125 of a certificate authority, being connected with one another through a network 1001.

The cardholder's computer 1002 is so constructed that an electronic computer of ordinary structure comprising a CPU 1003, a memory 1004, an I/O 1026 functioning as an interface with the network 1001, a display 1005, and a keyboard 1006, each connected through a bus 1008, is further connected with an IC card reader/writer 1007 through the bus 1008, for communicating with two IC cards A 1027, B 1045 owned by the cardholder and shown in Fig. 2.

Similarly, the merchant's computer 1065 is so constructed that an electronic computer of ordinary structure comprising a CPU 1066, a memory 1067, an I/O 1088 functioning as an interface with the network 1001, a display 1068, and a keyboard 1069, each connected through a bus 1071, is further connected with an IC card reader/writer 1070 through the bus 1071, for communicating with two IC cards A' 1089, B' 1107 owned by the merchant and shown in Fig. 3.

As shown in Fig. 2, the two IC cards A 1027 and B 1045 owned by the cardholder are ordinarily-constructed portable electronic computers, each comprising a CPU 1028, 1046, a memory 1029, 1047, and an I/O 1044, 1064 functioning as an interface with the cardholder's computer 1002, each being connected through buses 1030, 1048.

Similarly, as shown in Fig. 3, the two IC cards A' 1089 and B' 1107 owned by the merchant are ordinarily-constructed portable electronic computers, each comprising a CPU 1090, 1108, a memory 1091, 1109, and an I/O 1106, 1124 functioning as an interface with the merchant's computer 1065, each being connected through buses 1092, 1110.

These IC cards are distributed in advance to the cardholder and merchant by the credit company as a card issuer.

The cardholder's computer 1002 receives the following information (see Fig. 1) from the credit company as the card issuer via a storage medium such as an FD or a CD-ROM or the network, and stores the information into the memory 1004.

- A common key C_AC 1009 known only to the cardholder's computer 1002 and the IC card A 1027: this key C_AC 1009 is used for ciphered communication between the cardholder's computer 1002 and the IC card A 1027.
- A common key C_BC 1010 known only to the cardholder's computer 1002 and the IC card B 1045: this key C_BC 1010 is used for ciphered communication between the cardholder's computer 1002 and the IC card B 1045.
- A system key P 1011
- An order N 1012 of the system key P 1011
- An ID number C 1013 of the cardholder's computer 1002: this ID number C 1013 is uniquely set and assigned by the card issuer. Thus, for example, when one computer is used by a plurality of cardholders, a plurality of ID numbers are assigned.

- Key generating programs PROG1_1014, PROG2_1015, and PROG3_1016 of the cardholder: these programs are used for generating a key for a digital signature in cooperation with the IC card A 1027 and B 1045.
- Signature generating/encrypting programs PROG4_1017, PROG5_1018, and PROG6_1019 of the cardholder: these programs are used for performing a digital signature on a message and encrypting the message in cooperation with either of the IC cards A 1027 and B 1045.

The IC card A 1027 is delivered to the cardholder by the credit company, in a state that the card stores the following information (see Fig. 2) in the memory 1029.

- The common key C_AC 1009 known only to the IC card A 1027 and the cardholder's computer 1002: this key C_AC 1009 is used for ciphered communication between the IC card A 1027 and the cardholder's computer 1002.
- A common key C_AB 1032 known only to the IC card A 1027 and the IC card B 1045: this key C_AB 1032 is used for ciphered communication between the IC card A 1027 and the IC card B 1045.
- The system key P 1011
- The order N 1012 of the system key P 1011
- An ID number A 1035 of the IC card A 1027: this ID number A is uniquely set and assigned by the card issuer.
- The key generating programs PROG2_1015 and PROG3_1016 of the cardholder: these programs are used for generating a key for a digital signature in cooperation with the cardholder's computer 1002 and the IC card B 1045.
- The signature generating/encrypting programs PROG5_1018 and PROG6_1019 of the cardholder: these programs are used for generating a digital signature on a message and encrypting the message in cooperation with either of the cardholder's computer 1002 and the IC card B 1045.

The IC card B 1045 is delivered to the cardholder by the credit company, in a state that the card stores the following information (see Fig. 2) in the memory 1047.

- The common key C_BC 1010 known only to the IC card B 1045 and the cardholder's computer 1002: this key C_BC 1010 is used for ciphered communication between the IC card B 1045 and the cardholder's computer 1002.
- The common key C_AB 1032 known only to the IC card B 1045 and the IC card A 1027: this key C_AB 1032 is used for ciphered communication between the IC card A 1027 and the IC card B 1045.
- The system key P 1011
- The order N 1012 of the system key P 1011
- An ID number B 1053 of the IC card B 1045: this ID number B 1053 is uniquely set and assigned by the card issuer.
- The key generating programs PROG2_1015 and PROG3_1016 of the cardholder: these programs are used for generating a key for a digital signature in cooperation with the cardholder's computer 1002 and the IC card A 1027.
- The signature generating/encrypting programs PROG5_1018 and PROG6_1019 of the cardholder; these programs are used for generating a digital signature on a message and encrypting the message in cooperation with either of the cardholder's computer 1002 and the IC card A 1027.

The merchant's computer 1065 receives the following information (see Fig. 1) from the credit company as the card issuer via a storage medium such as an FD or a CD-ROM or the network, and stores the information into the memory 1067.

- A common key C_A'C' 1072 known only to the merchant's computer 1065 and the IC card A' 1089: this key C_A'C' 1072 is used for ciphered communication between the merchant's computer 1065 and the IC card A' 1089.
- A common key C_B'C' 1073 known only to the merchant's computer 1065 and the IC card B' 1107: this key C_B'C' 1073 is used for ciphered communication between the merchant's computer 1065 and the IC card B' 1107.
- The system key P 1011
- The order N 1012 of the system key P 1011
- An ID number C' 1076 of the merchant's computer 1065: this ID number C' 1076 is uniquely set and assigned by the card issuer. Thus, for example, when one computer is used by a plurality of merchants, a plurality of ID numbers are assigned.
- Key generating programs PROG1'_1077, PROG2'_1078, and PROG3'_1079 of the merchant: these programs are used for generating a key for decryption of a message, in cooperation with the IC card A' 1089 and B' 1107.
- Decrypting programs PROG7_1080 and PROG8_1081 of the merchant: these programs are used for decryption of an encrypted message, in cooperation with either of the IC cards A' 1089 and B' 1107.
- A signature verifying program PROG9_1082 of the merchant: this program is used for verifying a digital signature.

The IC card A' 1089 is distributed to the cardholder by the credit company, in a state that the card stores the following information (see Fig. 3) in the memory 1091.

- The common key C_A'C' 1072 known only to the IC card A' 1089 and the computer 1065: this key C_A'C' 1072 is used for ciphered communication between the IC card A' 1089 and the merchant's computer 1065.
- A common key C_A'B' 1094 known only to the IC card A' 1089 and the IC card B' 1107: this key C_A'B' 1094 is used for ciphered communication between the IC card A' 1089 and the IC card B' 1107.
- The system key P 1011
- The order N 1012 of the system key P 1011

- An ID number A' 1097 of the IC card A' 1089: this ID number A' 1097 is uniquely set and assigned by the card issuer.
- The key generating program PROG2'_1078 and PROG3'_1079 of the merchant: these programs are used for generating a key for encryption and decryption of a message, in cooperation with the merchant's computer 1065 and the IC card B' 1107.
- The decrypting program PROG8_1081 of the merchant: this program is used for decryption of an encrypted message, in cooperation with either of the merchant's computer 1065 and the IC card B' 1107.
  The IC card B' 1107 is distributed to the cardholder by the credit company, in a state that the card stores the following information (see Fig. 3) in the memory 1109.
- The common key C_B'C' 1073 known only to the IC card B' 1107 and the merchant's computer 1065: this key C_B'C' 1073 is used for ciphered communication between the IC card B' 1107 and the merchant's computer 1065.
- The common key C_A'B' 1094 known only to the IC card B' 1107 and the IC card A' 1089: this common key C_A'B' 1094 is used for ciphered communication between the IC card B' 1107 and the IC card A' 1089.
- The system key P 1011
- The order N 1012 of the system key P 1011
- An ID number B' 1115 of the IC card B' 1107: this ID number B' 1115 is uniquely set and assigned by the card issuer.
- The key generating programs PROG2'_1078 and PROG3'_1079 of the merchant: these programs are used for generating a key for encryption and decryption of a message, in cooperation with the merchant's computer 1065 and the IC card A' 1089.
- The decrypting program PROG8_1081 of the merchant: this program is used for decryption of an encrypted message, in cooperation with either of the merchant's computer 1065 and the IC card A' 1089.

In the system of the above construction, the cardholder's computer 1002 first generates a key for generating a digital signature, in cooperation with the IC cards A 1027 and B 1045 inserted into the IC card reader/writer 1007. This key is so divided into pieces of information that it is possible to calculate it when any two of the cardholder's computer 1002, the IC card A 1027, and the IC card B 1045 cooperate, and these pieces of information are distributed into and retained respectively by the cardholder's computer 1002, the IC card A 1027, and the IC card B 1045 (2-out-of-3). Usually, this processing is performed only once, after issuing the IC card A 1027 and the IC card B 1045.

When the cardholder inputs an instruction to generate the key for generating a digital signature, into the cardholder's computer 1002 through the keyboard 1006, then, the key generating program PROG1_1014 is read from the memory 1004 and executed by the CPU 1003. The key generating program PROG1_1014 reads the key generating program PROG2_1015 from the memory 1004, to make the CPU 1003 execute it. Further, the key generating program PROG1_1014 instructs each of the IC card A 1027 and the IC card B 1045 to execute the key generating program PROG2_1015. Receiving this instruction, in the IC card A 1027, the key generating program PROG2_1015 is read from the memory 1029 and executed by the CPU 1028. Similarly, in the IC card B 1045, the key generating program PROG2_1015 is read from the memory 1047 and executed by the CPU 1046.

When the key generating program PROG2_1015 is executed in each of the cardholder's computer 1002, the IC card A 1027, and the IC card B 1045, the key generating program PROG1_1014 receives those execution results. Then, the key generating program PROG1_1014 reads the key generating program PROG3_1016 from the memory 1004, to make the CPU 1003 execute it, using those execution results as input data to the program PROG3_1016. Further, the key generating program PROG1_1014 informs the IC card A 1027 and the IC card B 1045 about the above-mentioned execution results, and instructs each of them to execute the key generating program PROG3_1016. Receiving this instruction, in the IC card A 1027, the key generating program PROG3_1016 is read from the memory 1029, and executed by the CPU 1028 using the above-mentioned execution results as input data. Similarly, in the IC card B 1045, the key generating program PROG3_1016 is read from the memory 1047, and executed by the CPU 1046 using the above-mentioned execution results as input data.

As a result, the cardholder's computer 1002, the IC card A 1027, and the IC card B 1045 now have such pieces of private-key generating information respectively that when any two of the cardholder's computer 1002, the IC card A 1027, and the IC card B 1045 cooperate, it is possible to calculate a private key for generating a signature (2-out-of-3). Further, each of the cardholder's computer 1002, the IC card A 1027 and the IC card B 1045 retains public key information Qc 1022 that pairs with that private key for generating a signature (see Figs. 1 and 2).

In the present embodiment, ciphered communication with each computer is realized by common key cryptography. However, it also may be realized by another method, for example, public key cryptography.

Next, the key generating program PROG1_1014 sends the above-mentioned public key information Qc 1022 to the certificate authority's computer 1125 through the network 1001. Receiving this, the certificate authority's computer 1125 generates a public key certificate Vc 1023 to certify that the public key information Qc 1022 is the public key to be used for verifying a signature generated by the cardholder, and returns it to the cardholder's computer 1002 through the network 1001.

When the cardholder's computer 1002 receives the public key certificate Vc 1023, the key generating program PROG1_1014 makes the memory 1004 hold the public key certificate Vc 1023 (see Fig. 1). Further, the key generating program PROG1_1014 sends the public key certificate Vc 1023 to the IC card A 1027 and the IC card B 1045, to make them hold it in the memories 1029 and 1047, respectively (see Fig. 2).

Now, there will be described the processing of the key generating program PROG1_1014 executed in the cardholder's computer 1002 and the processing of the key generating programs PROG2_1015 and PROG3_1016 executed in each of the cardholder's computer 1002, the IC card A 1027, and the IC card B 1045.

In the present embodiment, as an addition operation in each program described below, is employed the addition operation on points on an elliptic curve defined by the following equation on a finite field of order p (a prime number):

$$y^2 = x^3 + a \cdot x + b$$

where a and b are integers more than or equal to 0 and less than p.

First, the processing of the key generating program PROG1_1014 executed in the cardholder's computer 1002 will be described.

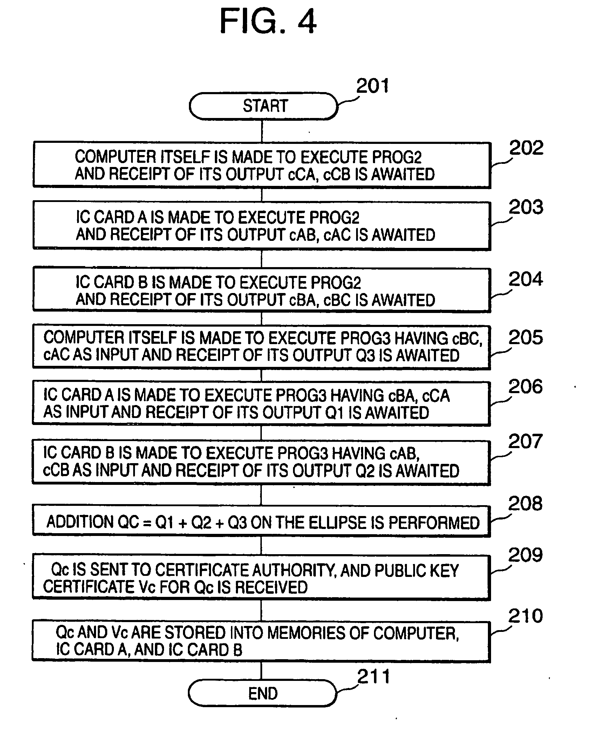

Fig. 4 is a flowchart showing a flow of the processing performed by the key generating program PROG1_1014. As described above, this flow is realized when, in the state that the IC cards A 1027 and B 1045 are inserted into the IC card reader/writer 1007, the cardholder inputs a key generating instruction into the cardholder's computer 1002 through the keyboard 1006, and the key generating program PROG1_1014 is read from the memory 1004 to be executed by the CPU 1003.

(1) Step 201: Start

(2) Step 202: The key generating program PROG2_1015 is read from the memory 1004 to be executed by the CPU 1003. Receipt of the execution results cCA and cCB is awaited, and then, cCA and cCB are stored into the memory 1004.

(3) Step 203: The IC card A 1027 is instructed to execute the key generating program PROG2_1015. Awaiting receipt of the execution results cAB and cAC according to the key generating program PROG2_1015 from the IC card A 1027, cAB and cAC are stored into the memory 1004.

(4) Step 204: The IC card B 1045 is instructed to execute the key generating program PROG2_1015. Awaiting receipt of the execution results cBA and cBC according to the key generating program PROG2_1015 from the IC card B 1045, cBA and cBC are stored into the memory 1004.

(5) Step 205: The key generating program PROG3_1016 and the execution results cAC and cBC are read from the memory 1004, and then, the key generating program PROG3_1016 is executed by the CPU 1003 with cAC and cBC being used as input data. Then, the execution result Q3 is stored into the memory 1004.

(6) Step 206: The execution results cBA and cCA are read from the memory 1004 and passed to the IC card A 1027, and execution of the key generating program PROG3_1016 is instructed. Then, awaiting receipt of the execution result Q1 according to the key generating program PROG3_1016 from the IC card A 1027, Q1 is stored into the memory 1004.

(7) Step 207: The execution results cAB and cCB are read from the memory 1004 and passed to the IC card B 1045, while instructing execution of the key generating program PROG3_1016. Then, awaiting receipt of the execution result Q2 according to the key generating program PROG3_1016 from the IC card B 1045, Q2 is stored into the memory 1004.

(8) Step 208: An addition:

$$Qc = Q1 + Q2 + Q3$$

on the elliptic curve is executed to calculate the public key Qc 1022.

(9) Step 209: The public key Qc 1022 is sent to the certificate authority's computer 1125, and it is awaited that the computer 1125 sends the public key certificate Vc 1023 corresponding to the public key Qc 1022.

(10) Step 210: The public key Qc 1022 and the public key certificate Vc 1023 are stored into the memory 1004. Further, they are sent to the IC card A 1027 and the IC card B 1045, to make them stored into the memories 1029 and 1047 of the IC card A 1027 and the IC card B 1045, respectively.

(11) Step 211: End

Next, the processing of the key generating program PROG2_1015 executed in each of the cardholder's computer 1002, the IC card A 1027, and the IC card B 1045 will be described.

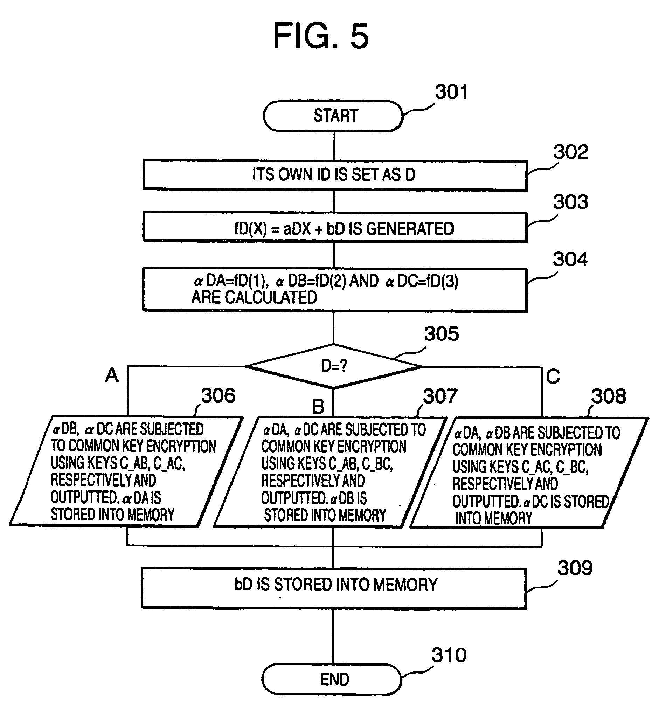

Fig. 5 is a flowchart showing a flow of the processing performed by the key generating program PROG2_1015. As described above, this flow is realized in each of the cardholder's computer 1002, the IC card A 1027, and the IC card B 1045, when, in accordance with an instruction from the key generating program PROG1_1014, the key generating program PROG2_1015 is read from memory and executed by a CPU.

(1) Step 301: Start

(2) Step 302: An ID number stored in its own memory is assigned to its own temporary ID number D.

(3) Step 303: The order N 1012 of the system key P 1011 stored in its own memory is read to generate random numbers aD and bD that are more than or equal to 1 and less than N.

(4) Step 304: Based on a linear expression fD(x) = aD·x + bD,

$\alpha$DA = fD(1) (mod N),
$\alpha$DB = fD(2) (mod N), and
$\alpha$DC = fD(3) (mod N)

are calculated.

(5) Step 305: When D = A (the ID number 1035 of the IC card A 1027), then the flow proceeds to Step 306. When D = B (the ID number 1053 of the IC card B 1045), then the flow proceeds to Step 307. And, when D = C (the ID number 1013 of the cardholder's computer 1002), then the flow proceeds to Step 308.

(6) Step 306: $\alpha$DB and $\alpha$DC are subjected to the common key encryption using the common keys C_AB 1032 and C_AC 1009, respectively. These results are passed as cAB and cAC to the key generating program PROG1_1014 under execution in the cardholder's computer 1002. Further, $\alpha$DA is stored into its own memory 1029 (i.e., of the IC card A 1027 (the computer of the ID number A)), and the flow proceeds to Step 309.

(7) Step 307: $\alpha$DA and $\alpha$DC are subjected to the common key encryption using the common keys C_AB 1032 and C_BC 1010, respectively. These results are passed as cBA and cBC to the key generating program PROG1_1014 under execution in the cardholder's computer 1002. Further, $\alpha$DB is stored into its own memory 1047 (i.e., of the IC card B 1045 (the computer of the ID number B)), and the flow proceeds to Step 309.

(8) Step 308: $\alpha$DA and $\alpha$DB are subjected to the common key encryption using the common keys C_AC 1009 and C_BC 1010, respectively. These results are passed as cCA and cCB to the key generating program PROG1_1014. Further, $\alpha$DC is stored into its own memory 1004 (i.e., of the cardholder's computer 1002 (the computer of the ID number C)), and the flow proceeds to Step 309.

(9) Step 309: The random number bD generated in Step 303 is stored into the memory of its own computer.

(10) Step 310: End

Next, the processing of the key generating program PROG3_1016 executed in each of the cardholder's computer 1002, the IC card A 1027, and the IC card B 1045 will be described.

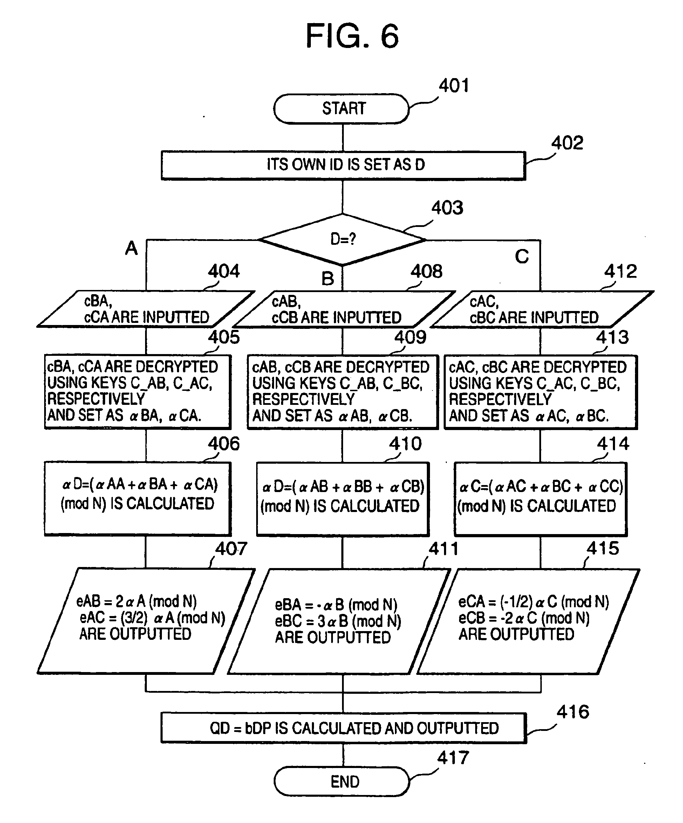

Fig. 6 is a flowchart showing a flow of the processing performed by the key generating program PROG3_1016. As described above, this flow is realized in each of the cardholder's computer 1002, the IC card A 1027, and the IC card B 1045, when, in accordance with an instruction from the key generating program PROG1_1014, the key generating program PROG3_1016 is read from memory and executed by a CPU.

(1) Step 401: Start

(2) Step 402: An ID number stored in its own memory is assigned to its own temporary ID number D.

(3) Step 403: When D = A (the ID number 1035 of the IC card A 1027), then the flow proceeds to Step 404. When D = B (the ID number 1053 of the IC card B 1045), then the flow proceeds to Step 408. And, when D = C (the ID number 1013 of the cardholder's computer 1002), then the flow proceeds to Step 412.

(4) Step 404: cBA and cCA sent from the key generating program PROG1_1014 are inputted.

(5) Step 405: Inputted cBA and cCA are decrypted with the common keys C_AB 1032 and C_AC 1009, respectively. And, the obtained results are referred to as $\alpha$BA and $\alpha$CA.

(6) Step 406: The order N 1012 of the system key P 1011 and $\alpha$DA stored in its own memory are read, and, setting $\alpha$DA = $\alpha$AA,

$$\alpha A = (\alpha AA + \alpha BA + \alpha CA) \pmod{N}$$

is calculated.

(7) Step 407:

$$eAB = 2\alpha A \quad (mod\ N)$$

$$eAC = (3/2)\ \alpha A \quad (mod\ N),$$

are calculated. Then, eAB is stored into its own memory 1029 (i.e., of the IC card A 1027) as private-key generating information eAB 1040 for recovering the private key for generating a digital signature, that recovering being performed in cooperation with the IC card B 1045. Similarly, eAC is stored into its own memory 1029 (i.e., of the IC card A 1027) as private-key generating information eAC 1041 for recovering the private key for generating a digital signature, that recovering being performed in cooperation with the cardholder's computer 1002. Then, the flow proceeds to Step 416.

(8) Step 408: cAB and cCB sent from the key generating program PROG1_1014 are inputted.

(9) Step 409: Inputted cAB and cCB are decrypted with the common keys C_AB 1032 and C_BC 1010, respectively. And, the obtained results are referred to as $\alpha AB$ and $\alpha CB$.

(10) Step 410: The order N 1012 of the system key P 1011 and $\alpha DB$ stored in its own memory are read, and setting $\alpha DB = \alpha BB$,

$$\alpha B = (\alpha AB + \alpha BB + \alpha CB) \quad (mod\ N)$$

is calculated.

(11) Step 411:

$$eBA = -\alpha B \quad (mod\ N)$$

$$eBC = 3\alpha B \quad (mod\ N)$$

are calculated. Then, eBA is stored into its own memory 1047 (i.e., of the IC card B 1045) as private-key generating information eBA 1060 for recovering the private key for generating a digital signature, that recovering being performed in cooperation with the IC card A 1027. Similarly, eBC is stored into its own memory 1047 (i.e., of the IC card B 1045) as private-key generating information eBC 1061 for recovering the private key for generating a digital signature, that recovering being performed in cooperation with the cardholder's computer 1002. Then, the flow proceeds to Step 416.

(12) Step 412: cAC and cBC sent from the key generating program PROG1_1014 are inputted.

(13) Step 413: Inputted cAC and cBC are decrypted with the common keys C_AC 1009 and C_BC 1010, respectively. And, the obtained results are referred to as $\alpha AC$ and $\alpha BC$.

(14) Step 414: The order N 1012 of the system key P 1011 and $\alpha DC$ stored in its own memory are read, and setting $\alpha DC = \alpha CC$,

$$\alpha C = (\alpha AC + \alpha BC + \alpha CC) \quad (mod\ N)$$

is calculated.

(15) Step 415:

$$eCA = (-1/2)\ \alpha C \quad (mod\ N)$$

$$eCB = -2\alpha C \pmod{N}$$

are calculated. Then, eCA is stored into its own memory 1004 (i.e., of the cardholder's computer 1002) as private-key generating information eCA 1020 for recovering the private key for generating a digital signature, that recovering being performed in cooperation with the IC card A 1027. Similarly, eCB is stored into its own memory 1004 (i.e., of the cardholder's computer 1002) as private-key generating information eCB 1021 for recovering the private key for generating a digital signature, that recovering being performed in cooperation with the IC card B 1045. Then, the flow proceeds to Step 416.

(16) Step 416: The random number bD stored in a memory within its own computer (i.e., the random number generated by the key generating program PROG2_1015 executed in its own computer (see Steps 303 and 309 in Fig. 5)) and the system key P 1011 are read, and a point QD:

$$QD = bD \cdot P$$

on the elliptic curve is calculated. When D = A (the ID number 1035 of the IC card A 1027), then the calculated QD is passed as Q1 to the key generating program PROG1_1014. When D =B (the ID number 1053 of the IC card B 1045), then the calculated QD is passed as Q2 to the key generating program PROG1_1014. And, when D = C (the ID number 1013 of the cardholder's computer 1002), then QD is passed as Q3 to the key generating program PROG1_1014.

(17) Step 417: End

In the above-described flow of the key generating program PROG3_1016, the constants "2", "2/3" appearing as the coefficients in the expressions in Step 407, the constants "-1", "3" appearing as the coefficients in the expressions in Step 411, the constants "-1/2", "-2" appearing as the coefficients in the expressions in Step 415, and the like are constants that can be specified from the IDs of the devices. Accordingly, for example, as the value stored in the memory 1029 of the IC card A 1027, only the value $\alpha$A calculated in Step 406 may be stored instead of storing both eAB 1040 and eAC 1041, in order to obtain the value of eAB 1040 or eAC 1041 from the stored value $\alpha$A by calculation when necessary.

Owing to the above-described flows shown in Figs. 4 - 6, the private-key generating information eCA 1020 and eCB 1021 retained in the cardholder's computer 1002, the private-key generating information eAB 1040 and eAC 1041 retained in the IC card A 1027, and the private-key generating information eBA 1060 and eBC 1061 retained in the IC card B 1045 satisfy:

$$d = (eAB + eBA) \pmod{N}$$
$$= (eAC + eCA) \pmod{N}$$
$$= (eBC + eCB) \pmod{N}$$

for a certain constant d.

Further, the public key Qc 1022 retained in each of the cardholder's computer 1002, the IC card A 1027, and the IC card B 1045 satisfies:

$$Qc = d \cdot P$$

as a point on the elliptic curve. Here, d corresponds to the private key. Thus, according to the above-described processing, the private-key generating information for restoring the private key d can be distributed into and retained by the cardholder's computer 1002, the IC card A 1027, and the IC card B 1045, in order that, when any two of the cardholder's computer 1002, the IC card A 1027, and the IC card B 1045 cooperate, it is possible to recover the private key d (2-out-of-3). Further, in the processing steps according to the above-described flows shown in Figs. 4 - 6, the private key d does not appear directly in the memory or bus of each computer. Thus, the private key d can not be known from the outside, and the security is assured.

Further, the above-described key generating programs may be changed as follows. In that case, although quantity of processing increases, it is possible to confirm that each computer (IC card) involved in generating the key is operating correctly.

In detail, the following processes are added.

For aD, bD generated in Step 303 of the key generating program PROG2_1015, each computer (IC card) calculates (aD)P, (bD)P as additional data for confirmation, and outputs them to the cardholder's computer 1002. These values are sent to all the other computers by the key generating program PROG1_1014. Using information of these values, each computer (IC card) confirms in the key generating program PROG3_1016 that information generated by and sent from another computer is correct. For example, the IC card A 1027 confirms in the following way that the value cBA generated by the IC card B 1045 is a correct value.

First, cBA is decrypted with the common key C_AB, to obtain αBA. Next, it is confirmed that, as a point of the elliptic curve, it satisfies:

$$(\alpha BA)P = (aB)P + (bB)P.$$

Since αBA is the value calculated as aB + bB by the IC card B 1045, the above expression is satisfied when αBA is the value sent correctly.

It is known that, from the viewpoint of computational complexity, it is difficult to obtain the value of aB or bB from the values (aB)P and (bB)P sent as the additional data for confirmation from the IC card B 1045 to the IC card A 1027 through the key generating program PROG1_1014. Thus, the safety is not reduced by sending the additional data for this confirmation.

Next, also in the merchant's computer 1065, processing similar to the above is performed to generate a key for decryption of a message.

Namely, the merchant's computer 1065 first cooperates with the IC card A' 1089 and B' 1107 inserted into the IC card reader/writer 1070 to generate a key for decryption of a message. This key is so divided into pieces of information that it is possible to calculate it when any two of the merchant's computer 1065, the IC card A' 1089, and the IC card B' 1107 cooperate, and these pieces of information are retained by the merchant's computer 1065, the IC card A' 1089, and the IC card B' 1107, respectively (2-out-of-3). Usually, this processing is performed only once, after issuing the IC card A' 1089 and the IC card B' 1107.

When an instruction to generate the key for decryption of a message is inputted into the merchant's computer 1065 through the keyboard 1069 from the merchant, then, the key generating program PROG1'_1077 is read from the memory 1067 and executed by the CPU 1066. The key generating program PROG1'_1077 reads the key generating program PROG2'_1078 from the memory 1067, to make the CPU 1066 execute it. Further, the key generating program PROG1'_1077 instructs each of the IC card A' 1089 and the IC card B' 1107 to execute the key generating program PROG2'_1078. Receiving this instruction, in the IC card A' 1089, the key generating program PROG2'_1078 is read from the memory 1091 and executed by the CPU 1090. Similarly, in the IC card B' 1107, the key generating program PROG2'_1078 is read from the memory 1109 and executed by the CPU 1108.

When the key generating program PROG2'_1078 is executed in each of the merchant's computer 1065, the IC card A' 1089, and the IC card B' 1107, the key generating program PROG1'_1077 receives those execution results. Then, the key generating program PROG1'_1077 reads the key generating program PROG3'_1079 from the memory 1067, to make the CPU 1066 execute it, using those execution results as input data to the program PROG3'_1079. Further, the key generating program PROG1'_1077 informs the IC card A' 1089 and the IC card B' 1107 about the above-mentioned execution results, and instructs each of them to execute the key generating program PROG3'_1079. Receiving this instruction, in the IC card A' 1089, the key generating program PROG3'_1079 is read from the memory 1091, and executed by the CPU 1090 using the above-mentioned execution results as input data. Similarly, in the IC card B' 1107, the key generating program PROG3'_1079 is read from the memory 1109, and executed by the CPU 1108 using the above-mentioned execution results as input data.

As a result, the merchant's computer 1065, the IC card A' 1089, and the IC card B' 1107 now have such pieces of private-key generating information respectively that when any two of the merchant's computer 1065, the IC card A' 1089, and the IC card B' 1107 cooperate, it is possible to calculate a private key for decryption of a message (2-out-of-3). Further, each of the merchant's computer 1065, the IC card A' 1089, and the IC card B' 1107 retains public key information Qm 1024 that pairs with that private key for decryption of a message (see Figs. 1 and 3).

Next, the key generating program PROG1'_1077 sends the above-mentioned public key information Qm 1024 to the certificate authority's computer 1125 through the network 1001. Receiving this, the certificate authority's computer 1125 generates a public key certificate Vm 1086 to certify that the public key information Qm 1024 is the public key to be used for encryption of a message addressed to the merchant, and returns it to the merchant's computer 1065 through the network 1001.

When the merchant's computer 1065 receives the public key certificate Vm 1024, the key generating program PROG1_1077 makes the memory 1067 hold the public key certificate Vm 1024 (see Fig. 1). Further, the key generating program PROG1'_1077 sends the public key certificate Vm 1024 to the IC card A' 1089 and the IC card B' 1107, to make them hold it in the memories 1091 and 1109, respectively (see Fig. 3).

Now, there will be described the processing of the key generating program PROG1'_1077 executed in the merchant's computer 1065 and the processing of the key generating programs PROG2'_1078 and PROG3' 1079 executed in each of the merchant's computer 1065, the IC card A' 1089, and the IC card B' 1107.

The key generating programs PROG1'_1077, PROG2'_1078, and PROG3'_1079 are same in their processing as the key generating programs PROG1_1014, PROG2_1015, and PROG3_1016 shown in Figs. 4 - 6, respectively.

Namely, the operation of the key generating program PROG1'_1077 can be described by replacing the affixes A, B and C with A', B' and C' respectively and by replacing the symbols Qc, Vc, PROG2 and PROG3 with Qm, Vm, PROG2' and PROG3' respectively in the key generating program PROG1_1014 shown in Fig. 4.

Further, the operation of the key generating program PROG2'_1078 can be described by replacing the affixes A, B and C with A', B' and C' respectively in the key generating program PROG2_1015, shown in Fig. 5.

Further, the operation of the key generating program PROG3'_1079 can be described by replacing the affixes A, B and C with A', B' and C' respectively in the key generating program PROG3_1016, shown in Fig. 6.

Accordingly, the private-key generating information e'C'A' 1083 and e'C'B' 1084 retained in the merchant's computer 1065, the private-key generating information e'A'B' 1102 and e'A'C' 1103 retained in the IC card A' 1089, and the private-key generating information e'B'A' 1120 and e'B'C' 1121 retained in the IC card B' 1107 satisfy:

$$d' = (e'A'B' + e'B'A') \pmod{N}$$
$$= (e'A'C' + e'C'A') \pmod{N}$$
$$= (e'B'C' + e'C'B') \pmod{N}$$

for a certain constant d'.

Further, the public key Qm 1024 retained in each of the merchant's computer 1065, the IC card A' 1089, and the IC card B' 1107 satisfies:

$$Qm = d' \cdot P$$

as a point on the elliptic curve. Here, d' corresponds to the private key. Thus, according to the above-described processing, the private-key generating information for restoring the private key d' can be distributed into and retained by the merchant's computer 1065, the IC card A' 1089, and the IC card B' 1107, in order that, when any two of the merchant's computer 1065, the IC card A' 1089, and the IC card B' 1107 cooperate, it is possible to recover the private key d' (2-out-of-3). Further, in the processing steps, the private key d' does not appear directly in the memory or bus of each computer. Thus, the private key d' can not be known from the outside, and the security is assured.

Now, when, as described above, the private-key generating information for recovering the private key d for generating a digital signature is distributed into and retained by the cardholder's computer 1002, the IC card A 1027, and the IC card B 1045, and the private-key generating information for recovering the private key d' for decryption of a message is distributed into and retained by the merchant's computer 1065, the IC card A' 1089, and the IC card B' 1107, then, it is possible to transmit and receive a message for an electronic commerce between the cardholder's computer 1002 and the merchant's computer 1065.

In the following, processing by the cardholder's computer 1002 is described. However, when both the IC card A 1027 and the IC card B 1045 can be used, the processing may be executed in a computer other than the computer retaining the private-key generating information (on the assumption that the public information other than the private-key generating information and the concerned programs, etc. are set up in the former computer). Similarly, in the following, processing by the merchant's computer 1065 is described. However, when both the IC card A' 1089 and the IC card B' 1107 can be used, the processing may be executed in a computer other than the computer retaining the private-key generating information (on the assumption that the public information other than the private-key generating information and the concerned programs, etc. are set up in the former computer).

First, when the cardholder instructs the cardholder's computer 1002 through the keyboard 1006 to obtain information on an item that he wishes to purchase, the cardholder's computer 1002 transmits that intention to the merchant's computer 1065 through the network 1001. Receiving it, the merchant's computer 1065 reads item information 1141 on the desired item, the public key Qm 1024 for encryption of a message, and the public key certificate Vm 1086 on the public key Qm 1024 from its own memory 1067, and transmits them to the cardholder's computer 1002 through the network 1001.

Receiving the item information 1141, the public key Qm 1024, and the public key certificate Vm 1086 from the merchant's computer 1065, the cardholder's computer 1002 uses the public key certificate Vm 1086 to confirm the validity of the public key Qm 1024 by a publicly known method. Thereafter, the cardholder's computer 1002 stores the public key Qm 1024 into its own memory 1004. Then, the cardholder's computer 1002 prepares a purchase request message m 1025 on the item specified by the item information 1141 and preserves the message in its own memory 1004. Then, the cardholder's computer 1002 reads the signature generating/encrypting program PROG4_1017 from the memory 1004 and makes the CPU 1003 execute it.

The signature generating/encrypting program PROG4_1017, first, selects two computers for recovering the private key d for generating a digital signature. When only one of the IC card A 1027 and the IC card B 1045 is inserted into the IC card reader/writer 1007, that IC card inserted into the IC card reader/writer 1007 and its own computer (the cardholder's computer 1002) are selected as the two computers for recovering the private key d for generating a digital signature. On the other hand, when both the IC card A 1027 and the IC card B 1045 are inserted into the IC card reader/ writer 1007, any two computers are selected as the two computers for recovering the private key d for generating a digital signature, out of the IC card A 1027, the IC card B 1045, and its own computer (the cardholder's computer 1002). Then, the signature generating/encrypting program PROG4_1017 makes each of the selected two computers execute the signature generating/encrypting programs PROG5_1018 and PROG6_1019 successively. In this process, the signature generating/encrypting program PROG4_1017 sends the selected two computers the following information as input to the signature generating/encrypting program to be executed later: namely, the purchase request message m 1025, the public key Qm 1024 of the merchant, the ID number of a computer involved in generating a signature, and an output result of the already-executed signature generating/encrypting program.

When the above-described series of processes ends, the signature generating/encrypting program PROG4_1017 generates a signature (x, s) 1145 on the purchase request message m 1025 based on information outputted by the selected two computers. Further, the signature generating/encrypting program PROG4_1017 encrypts the purchase request message m 1025 with the public key Qm 1024 of the merchant to obtain an encrypted purchase request message m' 1144.

The signature (x, s) 1145 and the encrypted purchase request message m' 1144, together with the public key Qc 1022 for verifying a signature and the public key certificate Vc 1023 stored in the memory 1004, are sent to the merchant's computer 1065 through the network 1001.

Now, there will be described the processing of the signature generating/encrypting program PROG4_1017 executed in the cardholder's computer 1002 and the processing of the signature generating/encrypting programs PROG5_1018 and PROG6_1019 executed in each of the two computers selected by the signature generating/encrypting program PROG4_1017.

First, the processing of the signature generating/encrypting program PROG4_1017 executed in the cardholder's computer 1002 will be described.

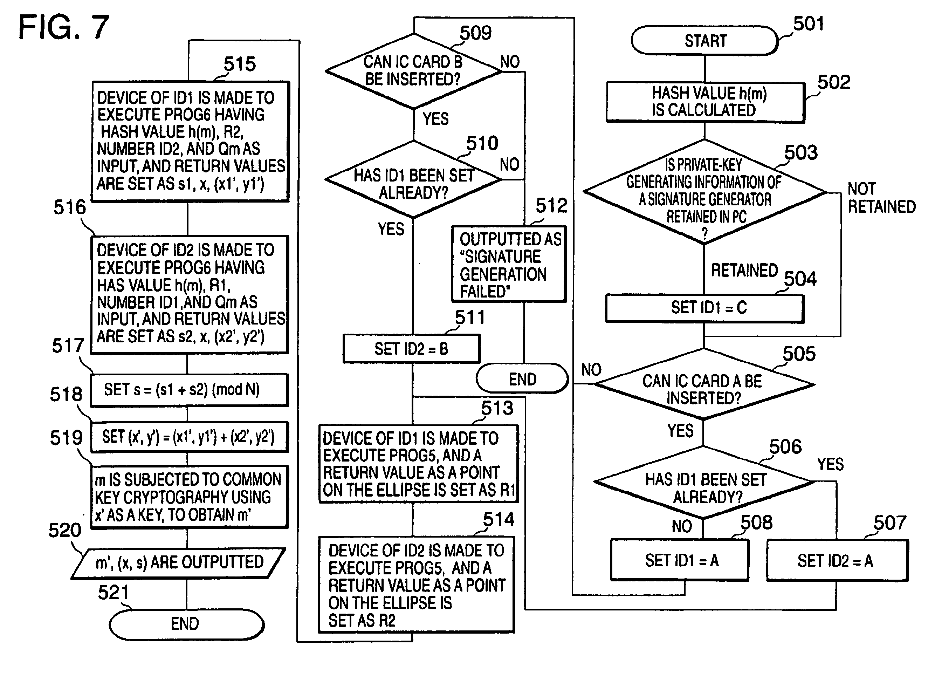

Fig. 7 is a flowchart showing a flow of the processing performed by the signature generating/encrypting program PROG4_1017. This flow is realized when a purchase request message m 1025 for an item is prepared and retained in the memory 1004, and the signature generating/encrypting program PROG4_1017 is read from the memory 1004 to be executed by the CPU 1003.

(1) Step 501: Start

(2) Step 502: The purchase request message m 1025 is read from the memory 1004 to calculate a hash value h (m) as its message digest.

(3) Step 503: It is confirmed that the private-key generating information is retained in the memory 1004. When it is retained, the flow proceeds to Step 504. Otherwise, the flow proceeds to Step 505.

(4) Step 504: Setting ID1 = C, the flow proceeds to Step 505.

(5) Step 505: Through the display 1005, an instruction is given to the cardholder to insert the IC card A 1027 into the IC card reader/writer 1007. And, it is detected if the IC card A 1027 is inserted into the IC card reader/writer 1007, for example within a prescribed time. When it is detected that the IC card A 1027 is inserted, the flow proceeds to Step 506. If not, the flow proceeds to Step 509.

(6) Step 506: When ID1 has been set already, the flow proceeds to Step 507. Otherwise, the flow proceeds to Step 508.

(7) Step 507: Setting ID2 = A, the flow proceeds to Step 513.

(8) Step 508: Setting ID1 = A, the flow proceeds to Step 509.

(9) Step 509: Through the display 1005, an instruction is given to the cardholder to insert the IC card B 1045 into the IC card reader/writer 1007. And it is detected if the IC card B 1045 is inserted into the IC card reader/writer 1007, for example within a prescribed time. When it is detected that the IC card B 1027 is inserted, the flow proceeds to Step 510. If not, the flow proceeds to Step 512.

(10) Step 510: When ID1 has been set already, the flow proceeds to Step 511. If not, the flow proceeds to Step 512.

(11) Step 511: Setting ID2 = B, the flow proceeds to Step 513.

(12) Step 512: When the flow proceeds to Step 512, it means that the two pieces of private-key generating information required for recovering the private key for generating a digital signature do not exist. In that case, the display 1005 is made to display "SIGNATURE GENERATION FAILED", and the flow proceeds to Step 521.

(13) Step 513: The device of ID1 (the cardholder's computer 1002 when ID1 = C, and the IC card A 1027 when ID1 = A,) is made to execute the signature generating/encrypting program PROG5_1018. And, a point on the elliptic curve as its execution result is received as R1.

(14) Step 514: The device of ID2 (the IC card A 1027 when ID2 = A, and the IC card B 1045 when ID2 = B,) is made to execute the signature generating/encrypting program PROG5_1018. And, a point on the elliptic curve as its execution result is received as R2.

(15) Step 515: The device of ID1 is given, as its input, the hash value h(m), R2, J (= ID2), and the merchant's public key Qm 1024 for encryption, and made to execute the signature generating/encrypting program PROG6_1019. And, a partial signature as its execution result is received as s1, x and (x1', y1').

(16) Step 516: The device of ID2 is given, as its input, the hash value h(m), R1, and J (= ID1), and the merchant's public key Qm 1024 for encryption, and made to execute the signature generating/encrypting program PROG6_1019. And, a partial signature as its execution result is received as s2, x and (x2', y2').

(17) Step 517: The order N 1012 of the system key P 1011 is read from the memory 1004, and the following expression:

$$s = (s1 + s2) \pmod{N}$$

is calculated.

(18) Step 518: The following expression:

$$(x', y') = (x1', y1') + (x2', y2')$$

is calculated.

(19) Step 519: The purchase request message m 1025 is read from the memory 1004. And x' is used as a key to encrypt the message m by the common key cryptography to obtain the encrypted message m' 1144.

(20) Step 520: Together with the encrypted message m' 1144, (x, s) is outputted as a digital signature 1145. These encrypted message m' 1144 and digital signature 1145, together with the public key Qc 1022 for verifying the signature and the public key certificate Vc 1023 for the public key Qc, are sent to the merchant's computer 1065 through the network 1001.

(21) Step 521: End

Next, there will be described the signature generating/encrypting program PROG5_1018 executed in each of the two computers selected by the signature generating/encrypting program PROG4_1017.

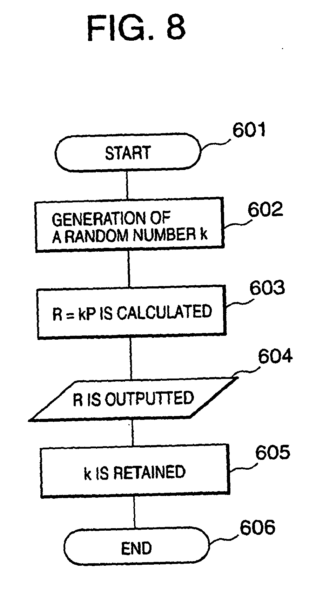

Fig. 8 is a flowchart showing a flow of the processing performed by the signature generating/encrypting program PROG5_1018. This flow is realized when, in accordance with an instruction from the signature generating/encrypting program PROG4_1017. the signature generating/encrypting program PROG5_1018 is read from the memory of its own computer to be executed by the CPU.

(1) Step 601: Start

(2) Step 602: A random number k is generated.

(3) Step 603: The system key P 1011 is read from its own memory, and a point:

$$R = k \cdot P$$

on the elliptic curve is calculated.
(4) Step 604: The calculated R is passed to the signature generating/encrypting program PROG4_1017.
(5) Step 605: The random number k is stored into its own memory.
(6) Step 606: End

Next, there will be described the signature generating/encrypting program PROG6_1019 executed in each of the two computers selected by the signature generating/encrypting program PROG4_1017.

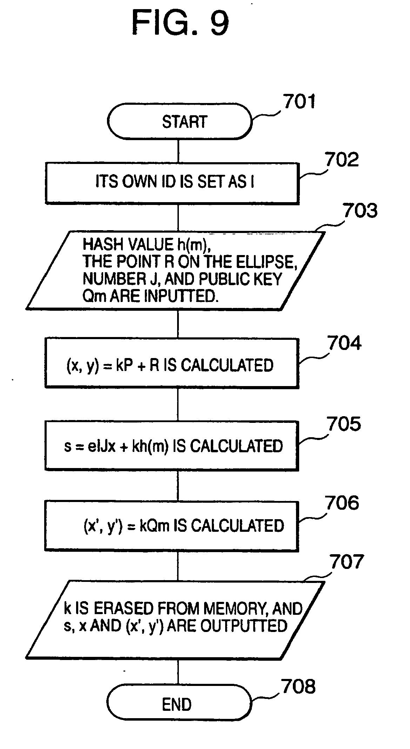

Fig. 9 is a flowchart showing a flow of the processing performed by the signature generating/encrypting program PROG6_1019. This flow is realized when, in accordance with an instruction from the signature generating/encrypting program PROG4_1017, the signature generating/encrypting program PROG6_1019 is read from the memory of its own computer to be executed by the CPU.

(1) Step 701: Start
(2) Step 702: I = C is set when its own computer is the cardholder's computer 1002, I = A is set when it is the IC card A 1027, and I = B is set when it is the IC card B 1045.
(3) Step 703: The hash value h(m), the point R (= R1 or R2) on the elliptic curve, J (= A, B or C), and the public key Qm 1024, all sent from the signature generating/encrypting program PROG4_1017, are taken in.
(4) Step 704: The system key P 1011 is read from its own memory, to calculate the following point (x, y) on the elliptic curve:

$$(x, \ y) \ = \ k \cdot P \ + \ R$$

(5) Step 705: The order N 1012 of the system key P 1011 and private-key generating information eIJ are read from its own memory. For example, when its own computer is the cardholder's computer 1002 (I = C) and J sent from the signature generating/encrypting program PROG4_1017 is A (in this case, ID1 = C and ID2 = C in Fig. 7), then, the private-key generating information eCA 1020 is read as the private-key generating information eIJ from the memory 1004. Then, the information read, i.e., the order N and the private-key generating information eIJ are used to calculate:

$$s \ = \ (eIJ \cdot x \ + \ k \cdot h(m)) \ \ (mod \ N)$$

(6) Step 706: a point:

$$(x', \ y') \ = \ k \cdot Qm$$

on the elliptic curve is calculated.
(7) Step 707: The random number k is erased from its own memory. And, s, x, and (x', y') are passed, as a partial signature, to the signal generating/encrypting program PROG4_1017.
(8) Step 708: End

The digital signature (x, s) 1145 generated by the above-described flows shown in Figs. 7 - 9 satisfies:

$$x \ = \ an \ x \ coordinate \ of \ ((k1 \ + \ k2) \cdot P)$$

$$s \ = \ (d \cdot x \ + \ (k1 \ + \ k2) \cdot h(m)) \ \ (mod \ N)$$

where k1 and k2 are the random numbers generated by the signature generating/encrypting PROG6_1019 executed in each of the two computers selected by the signature generating/encrypting program PROG4_1017. Thus, according to the above-described processing, it is possible to generate the digital signature corresponding to the message m, by using the two pieces of private key information that can recover the private key d and retained by two computers. Further, in the series of processes for generating this digital signature, the private key d and the private-key generating information are not directly outputted to another computer, but outputted as the partial signature in which a random number is concerned. Thus, the private key d and the private-key generating information can not be known from the outside, and the security is ensured. Further, in each computer, a random number k generated by itself for use in generating a partial signature does not need to be distributed into and retained by the other computers, and thus, it is not necessary to perform secret communication between the computers. Thus, the processing can be simplified, quantity of communication can be reduced, and quick processing can be realized.

Further, in the above-described processing, along with generation of the digital signature on the message m, the message m is encrypted using the key that is the information produced in the course of generating the signature. Thus, in encrypting the message m using the public key cryptography and sending it together with the digital signature on that message, it is not necessary to encrypt and to send a common key used for encrypting the message. Thus, it is possible to decrease quantity of communication and to realize quick processing.

Further, the above-described signature generating/encrypting program may be changed as follows. In that case, although quantity of processing increases, it is possible to confirm that each computer (IC card) involved in generating a signature is operating correctly. In detail, the following processes are added.

In the flow of the signal generating/encrypting program PROG6_1019, a point $QIJ = (eIJ)P$ on the elliptic curve is added to the data outputted as the partial signature in Step 707. Accordingly, in the flow of the signal generating/ encrypting program PROG4_1017, points QIJ on the elliptic curve, i.e. , $Q_{ID1\ ID2}$, $Q_{ID2\ ID1}$ are added also to the data received as the partial signatures in Steps 515 and 516, respectively. Further, these values are decided at the time of generating the key, and therefore, may be calculated in advance in the step of the key generation and retained by respective computers.

In the flow of the signal generating/encrypting program PROG4_1017, the following process is added just after Step 515, as a process for confirming that the partial signature is correct.

A point $s1^{-1} \cdot x \cdot P + s1^{-1} \cdot h(m) \cdot Q_{ID1\ ID2}$ on the elliptic curve is calculated, to confirm that its x coordinate is equal to x. When the values x and s1 calculated in the device of ID1 are correct ones, this equation is satisfied. When it is satisfied, the processing is continued. If not, the device of ID1 does not operate correctly, and a message is displayed on the display 1005 to the effect that the device of ID1 should be exchanged and thereafter the signature generation and encryption should be carried out again. Then, the processing is ended.

Similarly, in the flow of the signal generating/encrypting program PROG4_1017, the following process is added just after Step 516, as a process for confirming that the partial signature is correct.

A point $s2^{-1} \cdot x \cdot P + s2^{-1} \cdot h(m) \cdot Q_{ID2\ ID1}$ on the elliptic curve is calculated, to confirm that its x coordinate is equal to x. When the values x and s2 calculated in the device of ID2 are correct ones, this equation is satisfied. When it is satisfied, the processing is continued. If not, the device of ID2 does not operate correctly, and a message is displayed on the display 1005 to the effect that the device of ID2 should be exchanged and thereafter the signature generation and encryption should be carried out again. Then, the processing is ended.

Now, as described above, when the encrypted message m' 1144 and the digital signature (x, s) 1145 are generated by the cardholder's computer 1002, and, together with the public key Qc 1022 for verifying the signature and the public key certificate Vc 1023 for the public key Qc 1022, sent to the merchant's computer 1065 through the network 1001, then, the merchant's computer 1065 uses the public key certificate Vc 1023 to confirm the validity of the public key Qc 1022 by a publicly known method. When its validity is confirmed, the merchant's computer 1065 stores the public key Qc 1022 into the memory 1067. Then, the decrypting program PROG7_1080 is read from the memory 1067, to be executed by the CPU 1066.

The decrypting program PROG7_1080 first selects two computers for decrypting the encrypted message m' 1144. When only one of the IC card A' 1089 and the IC card B' 1107 is inserted into the IC card reader/writer 1070, then that IC card inserted into the IC card reader/writer 1070 and its own computer (the merchant's computer 1065) are selected as the two computers for decrypting the encrypted message m' 1144. On the other hand, when both the IC card A' 1089 and the IC card B' 1107 are inserted into the IC card reader/writer 1070, then any two computers are selected as the two computers for decrypting the encrypted message m' 1144, out of the IC card A' 1089, the IC card B' 1107, and its own computer (the merchant's computer 1065). Then, the decrypting program PROG7_1080 makes each of the selected two computers execute the decrypting program PROG8_1081 using a part of the digital signature (x, s) 1145 as input data. Thereafter, the execution results of the decrypting program PROG8_1081 executed in each of the selected computers are used to decrypt the encrypted message m' 1144.

Now, there will be described the processing of the decrypting program PROG7_1080 executed in the merchant's computer 1065 and the processing of the decrypting program PROG8_1081 executed in each of the two computers selected by the decrypting program PROG7_1080.

First, the processing of the decrypting program PROG7_1080 executed in the merchant's computer 1065 will be described.

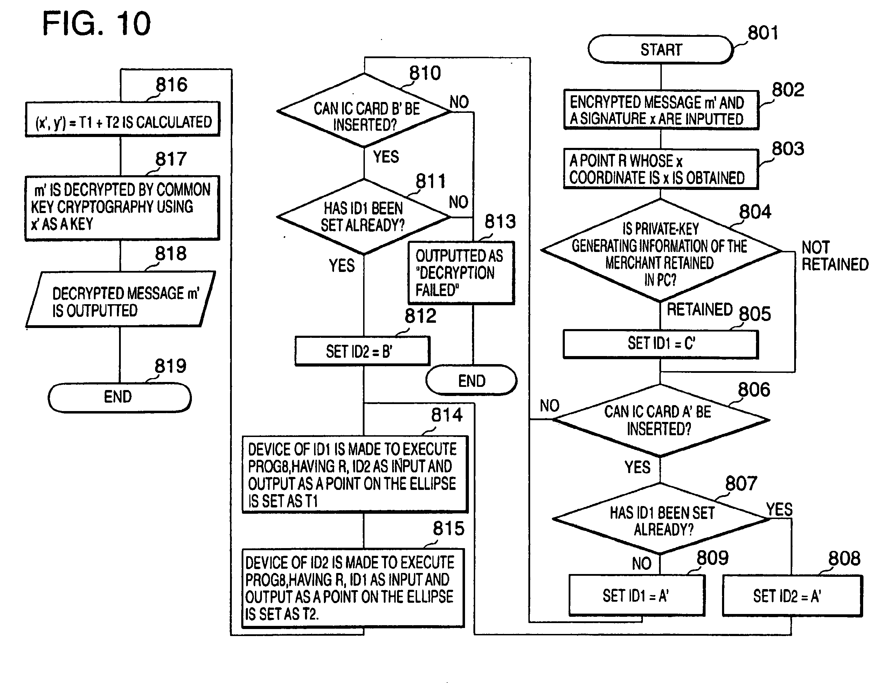

Fig. 10 is a flowchart showing a flow of the processing performed by the decrypting program PROG7_1080.

This flow is realized when the merchant's computer 1065 receives the encrypted message m' 1144, the digital signature (x, s) 1145, the public key Qc 1022 for verifying the digital signature, and the public key certificate Vc 1023 for the public key Qc 1022 from the cardholder's computer 1002, and confirms the validity of the public key Qc 1022 by a publicly known method, using the public key certificate Vc 1023, and thereafter, the encrypting program PROG7_1080 is read from the memory 1067 to be executed by the CPU 1066.

(1) Step 801: Start

(2) Step 802: The encrypted message m' 1144 and x of the digital signature (x, s) 1145 are taken in.

(3) Step 803: One point on the elliptic curve, whose x coordinate is the above-mentioned x taken in, is selected at will, and referred to as R.

(4) Step 804: It is confirmed that the private-key generating information is retained in the memory 1067. When it is retained, the flow proceeds to Step 805. If not, the flow proceeds to Step 806.

(5) Step 805: Setting ID1 = C', the flow proceeds to Step 806.

(6) Step 806: Through the display 1068, an instruction is given to the merchant to insert the IC card A' 1089 into the IC card reader/writer 1070. And, it is detected if the IC card A' 1089 is inserted into the IC card reader/writer 1070, for example within a prescribed time. When it is detected that the IC card A' 1089 is inserted, the flow proceeds to Step 807. If not, the flow proceeds to Step 810.

(7) Step 807: When ID1 has been set already, the flow proceeds to Step 808. If not, the flow proceeds to Step 809.

(8) Step 808: Setting ID2 = A', the flow proceeds to Step 814.

(9) Step 809: Setting ID1 = A', the flow proceeds to Step 810.

(10) Step 810: Through the display 1068, an instruction is given to the merchant to insert the IC card B' 1107 into the IC card reader/writer 1070. And it is detected if the IC card B' 1107 is inserted into the IC card reader/writer 1070, for example within a prescribed time. When it is detected that the IC card B' 1107 is inserted, the flow proceeds to Step 811. If not, the flow proceeds to Step 813.

(11) Step 811: When ID1 has been set already, the flow proceeds to Step 812. If not, the flow proceeds to Step 813.

(12) Step 812: Setting ID2 = B', the flow proceeds to Step 814.

(13) Step 813: When the flow proceeds to Step 813, it means that the two pieces of private-key generating information required for recovering the private key for decrypting the encrypted message m' 1144 do not exist. In that case, the display 1068 is made to display "DECRYPTION FAILED", and the flow proceeds to Step 819.

(14) Step 814: The device of ID1 (the merchant's computer 1065 when ID1 = C', and the IC card A' 1089 when ID2 = A', ) is given, as its input, R and J (= ID2), and made to execute the decrypting program PROG8_1081. And, a point on the elliptic curve as its execution result is received as T1.

(15) Step 815: The device of ID2 (the IC card A' 1089 when ID2 = A', , and the IC card B' 1107 when ID2 = B', ) is given, as its input, R and J (= ID1), and made to execute the decryption program PROG8_1081. And, a point on the elliptic curve as its execution result is received as T2.

(16) Step 816: A point:

$$(x', y') = T1 + T2$$

on the elliptic curve is calculated.

(17) Step 817: Out of the calculated (x', y'), x' (same as the key x' used for encrypting the message m in Step 519 shown in Fig. 7) is used as a key for decrypting the encrypted message m' 1144 by the common key cryptography. Using this , the message m 1025 is obtained.

(18) Step 818: The message m 1025 is outputted.

(19) Step 819: End

Next, there will be described the decrypting program PROG8_1081 executed in each of the two computers selected by the decrypting program PROG7_1080.

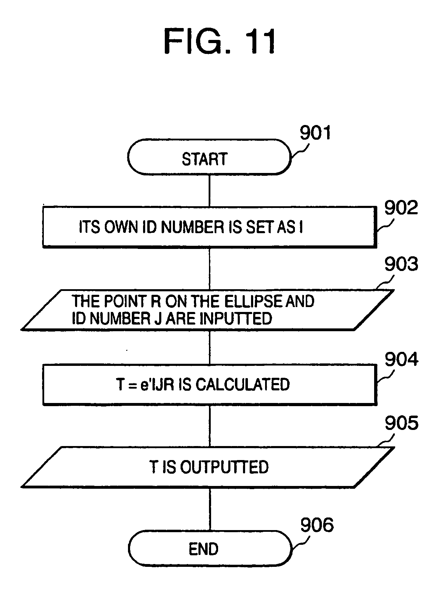

Fig. 11 is a flowchart showing a flow of the processing performed by the decrypting program PROG8_1081. This flow is realized when, in accordance with an instruction from the decrypting program PROG7_1080, the decrypting program PROG8_1081 is read from the memory of its own computer to be executed by the CPU.

(1) Step 901: Start

(2) Step 902: I = C' is set when its own computer is the merchant's computer 1065, I = A, is set when it is the IC card A' 1089, and I = B is set when it is the IC card B' 1107.

(3) Step 903: the point R on the elliptic curve and J (= A', B' or C'), both sent from the decrypting program PROG8_1080 are taken in.

(4) Step 904: The private-key generating information e'IJ is read from its own memory. For example, when its own computer is the merchant's computer 1065 and J sent from the decrypting program PROG8_1080 is A' (in this case, ID1 = C' and ID2 = A' in Fig. 10), then, the private-key generating information e'C'A' 1083 is read as the private-key generating information e'IJ from the memory 1067. Then, the following point T on the elliptic curve:

$$\mathtt{T\ =\ e'IJ \cdot R}$$

is calculated.

(5) Step 905: The calculated T is outputted.

(6) Step 906: End

According to the above-described flow shown in Figs. 10 and 11, it is possible to decrypt the encrypted message m' by using the two pieces of private key information that can recover the private key d'. Further, in the processes of the decryption processing, the private key d' and the private-key generating information are not directly outputted to another computer. Thus, the private key d' and the private-key generating information can not be known from the outside, and the security is ensured.

Now, when, as described above, the encrypted message m' 1144 is decrypted and the message m 1025 is recovered, then, the merchant's computer 1065 reads the signature verifying program PROG9_1082 from the memory 1067 to make the CPU 1066 execute it. Then, it is verified that the decrypted purchase request message m 1025 is valid. When it is valid, the purchase request is accepted as valid, and credit inquiry to the credit company's computer 1133 and shipment of the item are performed, to continue the electronic commerce. On the other hand, when it is not valid, the commerce is stopped.

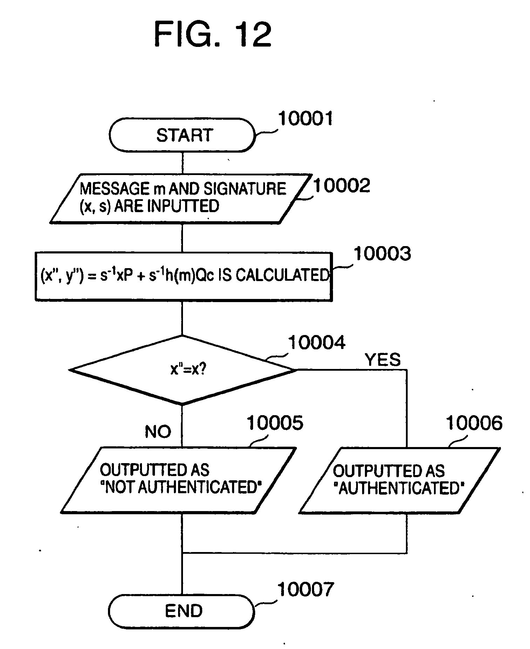

Fig. 12 is a flowchart showing a flow of the processing performed by the signature verifying program PROG9_1082. This flow is realized when, in accordance with an instruction from the decrypting program PROG7_1080, the decrypting program PROG9_1082 is read from the memory 1067 to be executed by the CPU.

(1) Step 10001: Start

(2) Step 10002: The recovered message m 1025 and the digital signature (x, s) 1145 are received from the decrypting program PROG7_1080.

(3) Step 10003: The hash value h(m) of the received message m 1025 is obtained, and the system key P 1011 is read from its own memory 1067, to calculate the following point (x'', y'') on the elliptic curve:

$$\mathtt{(x'',\ y'')\ =\ s^{-1} \cdot x \cdot P\ +\ s^{-1} \cdot h(m) \cdot Qc}$$

(4) Step 10004: It is examined if x'' = x. When x'' = x, then the flow proceeds to Step 10006. Otherwise, the flow proceeds to Step 10005.

(5) Step 10005: A message "NOT AUTHENTICATED" is displayed on the display 1068. And the flow proceeds to Step 10007.

(6) Step 10006: A message "AUTHENTICATED" is displayed on the display 1068. Then, the flow proceeds to Step 10007.

(7) Step 10007: End

According to the above-described flow shown in Fig. 12, the merchant, who obtained the encrypted message m 1025 and the digital signature (x, y) 1145, can confirm the validity of them, by referring to the public key Qc 1022. With regard to the verification of the digital signature, a conventional technique can be applied as it is.

Hereinabove, an embodiment of the present invention has been described.

The present embodiment has been described giving the example in which the system is so constructed that, when two out of three computers cooperate, signature generation and encryption can be performed. However, the present invention is not limited to this. Thus, also the system can be constructed as follows. Namely, for every combination of k (k < n) computers out of n computers, k pieces of private-key generating information $u_1$ - $u_k$ satisfying a private key d = $f(u_1, u_2, ..., u_k)$ are distributed and retained by the k computers within the combination so that signature generation and encryption are possible when any k out of n computers cooperate.

Further, there has been described the case in which the system is so constructed that, when two out of three computers cooperate, decryption and signature verification are possible. However, similarly it is possible to construct a system in which, k pieces of private-key generating information $u'_1$ - $u'_k$ satisfying a private key $d' = f(u'_1, u'_2, ..., u'_k)$ are distributed into and retained by k computers within a combination so that decryption and signature verification are possible when any k out of n computers cooperate.

In the above-described embodiment, the three computers (the cardholder's computer 1002, the IC card A 1027 and the IC card B 1045) on the cardholder's side cooperate with each other to generate the private-key generating information for recovering the private key d that is used for generating a digital signature, and the three computers (the merchant's computer 1065, the IC card A' 1089 and the IC card B' 1107) on the merchant's side cooperate with each other to generate the private-key generating information for recovering the private key d' that is used for decryption of a message. On the other hand, in the present example, a key for digital signature and a key for encryption/decryption of a message are generated in the computer 1133 of the credit company as the card issuer (a reliable third party).

Regarding the private-key generating information for recovering a private key d that is used for generating a digital signature, in the present embodiment, the credit company's computer 1133 distributes that information into the three computers on the cardholder's side, as follows.

(1) The order N 1012 of the system key P 1011 is read from its own memory 1135, to generate a random number d being a natural number more than or equal to 1 and less than N.
(2) The random number d is used as a private key to generate eAB and eBA, eBC and eCB, and eAC and eCA satisfying the following equations:

$$eBA = d - eAB$$

$$eCB = d - eBC$$

$$eCA = d - eAC$$

and they are retained in the memory 1135, as private-key generating information eAB 1040, eBA 1060, eBC 1061, eCB 1021, eAC 1009, and eCA 1020, respectively.
(3) The system key P 1011 is read from the memory 1135, to obtain Qc satisfying the following equation:

$$Qc = d \cdot P$$

This Qc is sent, as the public key Qc 1022 for the private key d, to the certificate authority's computer 1125 through the network 1001, to have it issue a public key certificate Vc 1023.
(4) Receiving the public key certificate Vc 1023, the following information is written into the memory 1029 of the IC card A 1027 through the IC card reader/writer 1136.

- The system key P 1011
- The order N 1012 of the system key P 1011
- The public key Qc 1022
- The public key certificate Vc 1023
- The ID number A 1035 of the IC card A 1027
- The signature generating/encrypting program PROG5_1018 of the cardholder
- The signature generating/encrypting program PROG6_1019 of the cardholder, and
- The private-key generating information eAB 1040 and eAC 1041
  Similarly, the following information is written into the memory 1047 of the IC card B 1045 through the IC card reader/writer 1136.
- The system key P 1011
- The order N 1012 of the system key P 1011
- The public key Qc 1022
- The public key certificate Vc 1023
- The ID number B 1053 of the IC card B 1027

- The signature generating/encrypting program PROG5_1018 of the cardholder
- The signature generating/encrypting program PROG6_1019 of the cardholder, and
- The private-key generating information eBA 1060 and eBC 1061

The IC card A 1027 and the IC card B 1045, to which the prescribed information has been written, are delivered to the cardholder by mail or the like.

(5) The credit company's computer 1133 writes the following information into a portable storage medium such as a CD-ROM or FD using a writing device not shown, and that medium is delivered to the cardholder by mail or the like. Or, the following information is sent to the cardholder's computer 1002 using the network 1001 (in that case, ciphered communication or the like is used to ensure the security).

- The system key P 1011
- The order N 1012 of the system key P 1011
- The public key Qc 1022
- The public key certificate Vc 1023
- The ID number C 1013 of the cardholder's computer 1002
- The signature generating/encrypting program PROG4_1017 of the cardholder
- The signature generating/encrypting program PROG5_1018 of the cardholder
- The signature generating/encrypting program PROG6_1019 of the cardholder, and
- The private-key generating information eCA 1020 and eCB 1021

Similarly, in the present embodiment, regarding the private-key generating information for recovering the private key d' that is used for decryption of a message, the credit company's computer 1133 distributes that information into the three computers on the merchant's side, as follows.

(1) The order N 1012 of the system key P 1011 is read from its own memory 1135, to generate a random number d' being a natural number more than or equal to 1 and less than N.

(2) The random number d' is used as a private key to generate e'A'B' and e'B'A', e'B'C' and e'C'B', and e'A'C' and e'C'A' satisfying the following equations:

$$e'B'A' = d' - e'A'B'$$

$$e'C'B' = d' - e'B'C'$$

$$e'C'A' = d' - e'A'C',$$

and they are retained in the memory 1135, as private-key generating information e'A'B' 1102, e'B'A' 1120, e'B'C' 1121, e'C'B' 1084, e'A'C' 1103, and e'C'A' 1083, respectively.

(3) The system key P 1011 is read from the memory 1135, to obtain Qm satisfying the following equation:

$$Qm = d' \cdot P$$

This Qm is sent, as the public key Qm 1024 for the private key d', to the certificate authority's computer 1125 through the network 1001, to have it issue a public key certificate Vm 1086.

(4) Receiving the public key certificate Vm 1086, the following information is written into the memory 1091 of the IC card A' 1089 through the IC card reader/writer 1136.

- The system key P 1011
- The order N 1012 of the system key P 1011
- The public key Qm 1024
- The public key certificate Vm 1086
- The ID number A' 1097 of the IC card A' 1089
- The decrypting program PROG8_1081 of the merchant, and

- The private-key generating information e'A'B' 1102 and e'A'C' 1103
  Similarly, the following information is written into the memory 1109 of the IC card B' 1107 through the IC card reader/writer 1136.
- The system key P 1011
- The order N 1012 of the system key P 1011
- The public key Qm 1024
- The public key certificate Vm 1086
- The ID number B' 1115 of the IC card B' 1107
- The decrypting program PROG8_1081 of the merchant, and
- The private-key generating information e'B'A' 1120 and e'B'C' 1121

The IC card A' 1089 and the IC card B' 1107, to which the prescribed information has been written, are delivered to the merchant by mail or the like.

(5) The credit company's computer 1133 writes the following information into a portable storage medium such as a CD-ROM or FD using the writing device not shown, and that medium is delivered to the merchant by mail or the like. Or, the following information is sent to the merchant's computer 1065 using the network 1001 (in that case, ciphered communication or the like is used to ensure the security).

- The system key P 1011
- The order N 1012 of the system key P 1011
- The public key Qm 1024
- The public key certificate Vm 1086
- The ID number C' 1076 of the merchant's computer 1065
- The decrypting program PROG7_1080 of the merchant
- The decrypting program PROG8_1081 of the merchant
- The signature verifying program PROG9_1082 of the merchant, and
- The private-key generating information e'C'A' 1083 and e'C'B' 1084

According to the present example, the private-key generating information for recovering the private key d that is used for generating a digital signature is generated in the computer 1133 of the credit company being a reliable third party, and retained by the three computers (the cardholder's computer 1002, the IC card A 1027 and the IC card B 1045) on the cardholder's side so that the information is not leaked to others.

Thus, it is not necessary to retain the key generating program PROG1_1014, PROG2_1015, and PROG3_1016 in the cardholder's computer 1002, the IC card A 1027, and the IC card B 1045. Further, also it is not necessary to retain the common keys C_AB 1009 and C_BC 1010 for performing ciphered communication between the cardholder's computer 1002, the IC card A 1027, and the IC card B 1045. As a result, it is possible to decrease quantity of processing required for the three computers on the cardholder's side. Further, also in this case, the private key d and the private-key generating information for recovering the private key d are not known to other parties than the credit company as a reliable third party, and thus, the security is ensured.

Similarly, the private-key generating information for recovering the private key d' that is used for decryption of a message is generated in the computer 1133 of the credit company as a reliable third party, and retained by the three computers (the merchant's computer 1065, the IC card A' 1089 and the IC card B' 1107) on the merchant's side so that the information is not leaked to others.

Thus, it is not necessary to retain the key generating program PROG1'_1077, PROG2'_1078, and PROG3'_ 1079 in the merchant's computer 1065, the IC card A' 1089, and the IC card B' 1107. Further, also it is not necessary to retain the common keys C_A'B' 1072 and C_B'C' 1073 for performing ciphered communication between the merchant's computer 1065, the IC card A' 1089, and the IC card B' 1107. As a result, it is possible to decrease quantity of processing required for the three computers on the merchant's side. Further, also in this case, the private key d' and the private-key generating information for recovering the private key d' are not known to other parties than the credit company as a reliable third party, and thus, the security is ensured.

In the above-described embodiment, the cardholder's computer 1002 sends the encrypted purchase request message m' 1144, together with the digital signature (x, s) 1145 on the purchase request message m 1025, to the merchant's computer 1065. On the other hand, in the present embodiment, the purchase request message m 1025 is send to the merchant's computer 1065, without being encrypted. In this case too, since the digital signature (x, s) 1145 is added to the purchase request message m 1025, it is impossible that a third party impersonates the cardholder to send a forged purchase request message to the merchant.

In the present example, the signature generating/encrypting programs PROG4_1017 and PROG6_1019 executed in the computers on the cardholder's side are changed as follows. Further, the decrypting programs PROG7_1080 and PROG8_1081 executed on the computers on the merchant's side become useless. 1. Modification to the signature generating/encrypting program PROG4_1017

In Fig. 7, Steps 515, 516 and 520 are modified as follows. Further. Steps 518 and 519 are deleted.

(1) Step 515: The device of ID1 is given, as its input, the hash value h(m), R2, and J (=ID2), and made to execute the signature generating/encrypting program PROG6_1019. Then, the partial signature as its execution result is received as s1 and x.

(2) Step 516: The device of ID2 is given, as its input, the hash value h(m), R1, and J (= ID1), and made to execute the signature generating/encrypting program PROG6_1019. And, a partial signature as its execution result is received as s2 and x.

(3) Step 520: Together with the purchase request message m 1025, (x, s) is outputted as a digital signature 1145.

2. Modification to the signature generating/encrypting program PROG6_1019

In Fig. 9, Steps 703 and 707 are modified as follows. Further, Step 706 is deleted.

(1) Step 703: The hash value h(m), the point R (= R1 or R2) on the elliptic curve, and J (= A, B or C), all sent from the signature generating/encrypting program PROG4_1017, are taken in.

(2) Step 707: The random number k is erased from its own memory. And, s and x are passed, as a partial signature, to the signal generating/encrypting program PROG4_1017.

In the above-described embodiment, the three computers (the merchant's computer 1065, the IC card A' 1089 and the IC card B' 1107) on the merchant's side cooperate with each other to generate and distributively retain the private-key generating information for recovering the private key d' that is used for decryption of a message. On the other hand, in the present embodiment, the merchant's computer 1065 generates and retains, by itself, the private key d' for decryption of a message. In spite of this modification, the computers on the merchant's side can generate the key x' for decryption of the encrypted message m' 1144 from the received digital signature (x, s). Accordingly, the computers on the cardholder's side do not need to encrypt the key x' for decryption of the encrypted message m' 1144, using the public key Qm 1024 of the merchant, and to separately send the encrypted key x' to the computers on the merchant's side.

In that case, the merchant's computer 1065 can generated the private key d' for decryption of a message, as follows.

(1) The order N 1012 of the system key P 1011 is read from the memory 1067, and a random number d' more than or equal to 1 and less than N is generated. And, this random number d' becomes the private key.

(2) The following point Qm on the elliptic curve:

$$Qm = d' \cdot P$$

is calculated, and this Qm is sent, as the public key Qm 1024 for the private key d', to the certificate authority's computer 1125, to have it issue a public key certificate Vm 1086.

(3) The private key d', the public key Qm 1024, and the public key certificate Vm 1086 are retained in its own memory 1067.

Further, in this case, the merchant's computer 1065 can decrypt the encrypted message m' 1144 sent from the cardholder's computer 1002, as follows.

(1) x of the digital signature (x, s) 1145 sent together with the encrypted message m' 1144 from the cardholder's computer 1002 is taken in. And, one point on the elliptic curve, whose x coordinate is x, is selected at will, and referred to as R.

(2) The following point (x'', y'') on the elliptic curve:

$$(x'', y'') = d' \cdot R$$

is calculated. Then, the obtained x'' is used as a key in the common key cryptography, for decrypting the encrypted message m' 1144 to obtain the message m 1025.

In the above-described embodiment, the three computers (the cardholder's computer 1002, the IC card A 1027 and the IC card B 1045) on the cardholder's side cooperate with each other to generate and distributively retain the private-key generating information for recovering the private key d that is used for generating a digital signature. On the other hand, in the present embodiment, the cardholder's computer 1002 generates and retains, by itself, the private key d for generation of a digital signature. In spite of this modification, the computers on the merchant's side can generate the key x' for decryption of the encrypted message m' 1144 from the received digital signature (x, s). Accordingly, the computers on the cardholder's side do not need to encrypt the key x' for decryption of the encrypted message m' 1144, using the public key Qm 1024 of the merchant, and to separately send the encrypted key x' to the computers on the merchant's side.

In that case, the cardholder's computer 1002 can generate the private key d for generating a digital signature, as follows.

(1) The order N 1012 of the system key P 1011 is read from the memory 1004, and a random number d more than or equal to 1 and less than N is generated. And, this random number d becomes the private key.
(2) The following point Qc on the elliptic curve:

$$Qc = d \cdot P$$

.

is calculated, and this Qc is sent, as the public key Qc 1022 for the private key d, to the certificate authority's computer 1125, to have it issue a public key certificate Vc 1023.
(3) The private key d, the public key Qc 1022, and the public key certificate Vc 1023 are retained in its own memory 1004.

Further, in this case, the cardholder's computer 1002 can encrypt the purchase request message m 1025 and generate a digital signature for that message, as follows.

(1) The purchase request message m 1025 is read from the memory 1004, and a hash value h(m) being its message digest is calculated.
(2) The order N 1012 of the system key P 1011 is read from the memory 1004, and a random number k more than or equal to 1 and less than N is generated. Then, the following point (x, y) on the elliptic curve:

$$(x, y) = k \cdot P$$

is calculated. Then,

$$s = (d \cdot x + k \cdot h(m)) \pmod{N}$$

is calculated.
(3) The public key Qm 1024 of the merchant is read from the memory 1004, and the following point (x', y') on the elliptic curve:

$$(x', y') = k \cdot Qm$$

is calculated.
(4) The purchase request message m 1025 is encrypted by the common key cryptography using x' as the key. By this, an encrypted message m' 1144 is obtained.
(5) Together with the encrypted message m' 1144, (x, s) is outputted as the digital signature 1145. The encrypted message m' 1144 and the digital signature 1145, together with the public key Qc 1022 for verification of the digital signature and the public key certificate Vc 1023, are sent to the merchant's computer 1065 through the network 1001.

In the above-described embodiment, the three computers (the merchant's computer 1065, the IC card A' 1089 and the IC card B' 1107) on the merchant's side cooperate with each other to generate and distributively retain the private-key generating information for recovering the private key d' that is used for decryption of a message. And, in addition, three computers (the cardholder's computer 1002, the IC card A 1027 and the IC card B 1045) on the cardholder's side cooperate with each other to generate and distributively retain the private-key generating information for recovering the private key d that is used for generating a digital signature.

On the other hand, in the present example, by applying the above-described Fourth Embodiment, the merchant's computer 1065 generates and retains, by itself, the private key d' for decryption of a message. And, in addition, by applying the above-described Fifth Embodiment, the cardholder's computer 1002 generates and retains, by itself, the private key d for generating a digital signature. In spite of this modification, the computers on the merchant's side can generate the key x' for decryption of the encrypted message m' 1144 from the received digital signature (x, s). Accordingly, the computers on the cardholder's side do not need to encrypt the key x' for decryption of the encrypted message m' 1144, using the public key Qm 1024 of the merchant, and to send the encrypted key x' to the computers on the merchant's side.

In the above-described example, the computer 1133 of the credit company being the card issuer (the reliable third party) generates the private-key generating information for recovering the private key d for generating a digital signature, and the generated information is distributed to and retained by the three computers (the cardholder's computer 1002, the IC card A 1027 and the IC card B 1045) on the cardholder's side. Thus, the system is so constructed that it is impossible to perform signature generation on a message and encryption of the message unless two out of three computers on the cardholder's side cooperate. On the other hand, in the present example, out of the three computers on the cardholder's side, one specific computer can perform by itself signature generation and encryption of a message.

For example, as the private-key generating information of the IC card A 1027, the private key d itself is used; as the private-key generating information of the IC card B 1045, only eBC 1061 is used; and as the private-key generating information of the cardholder's computer 1002, only eCB 1021 is used. Accordingly, generation of a signature and encryption of a message become possible when the IC card A 1027 exists, or when the IC card B 1045 and the cardholder's computer 1002 cooperate. Here, when the IC card A 1027 performs, by itself, generation of a signature on a message and encryption of the message, it can follow the procedure of the above-described example (the case where cardholder's computer 1002 performs, by itself, signature generation and encryption of a message).

Similarly, it is also possible to modify the system so that, out of the three computers on the merchant's side, one specific computer can perform, by itself, decryption of a message and verification.

Further, the present example has been described giving the example in which the system is so constructed that, when two specific computers out of the three cooperate, or when one specific computer exists, signature generation and encryption (or, decryption and verification) can be performed. However, the present example is not limited to this. Thus, also the system can be constructed as follows. Namely, k (k < n) pieces of private-key generating information $u_1$ - $u_k$ satisfying a private key $d = f(u_1, u_2, ..., u_k)$ are distributed into and retained by k specific computers out of n computers, so that when the k specific computers cooperate, signature generation and encryption (or, decryption and verification) can be performed. And, at the same time, l (l < n, l ≠ k) pieces of private-key generating information $u'_1$ - $u'_l$ satisfying a private key $d = f'(u'_1, u'_2, ..., u'_l)$ are distributed into and retained by l specific computers out of n computers, so that when the l specific computers cooperate, signature generation and encryption (or, decryption and verification) can be performed.

Here, some computers may be included in both groups of the above-described k specific computers and the above-described l specific computers. In that case, each computer included in both groups retains pieces of information corresponding to the respective groups.

The above-described examples have employed the signature system of so-called "ElGamal type", and the digital signature (x, s) 1145 is generated so as to satisfy:

$$x = x \text{ coordinate of } (k \cdot P)$$

$$s = (d \cdot x + k \cdot h(m)) \pmod{N}$$

where k is a random number, P is a base point, d is a private key for signature, h(m) is a hash value of a message m, and N is an order of the base point P.

However, the present invention is effective for signature systems different from this.

For example, the digital signature (x, s) 1145 may be generated so that it satisfies:

$$x = x \text{ coordinate of } (k \cdot P)$$

$$s = (d \cdot g(x) + k \cdot h(m)) \pmod{N}$$

where g is an arbitrary function.

Or, the digital signature (x, s) 1145 may be generated so that it satisfies:

$$x = x \text{ coordinate of } (k \cdot P)$$

$$s = (k \cdot g(x) + d \cdot h(m)) \pmod{N}$$

In the former case, Step 10003 of the signature verifying program PROG9_1082 shown in Fig. 12 can be modified as follows.

Step 10003: The following point (x'', y'') on the elliptic curve:

$$(x'', y'') = s \cdot h(m)^{-1} \cdot P - g(x) \cdot h(m)^{-1} \cdot Qc$$

is calculated.

In the latter case, Step 10003 of the signature verifying program PROG9_1082 shown in Fig. 12 can be modified as follows.

Step 10003: The following point (x'', y'') on the elliptic curve:

$$(x'', y'') = s \cdot g(x)^{-1} \cdot P - h(m) \cdot g(x)^{-1} \cdot Qc$$

is calculated.

Further, the so-called "Nyberg-Rueppel type" signature system may be used by modifying the signature generating/encrypting program PROG6_1019, the decrypting program PROG7_1080 and the signature verifying program PROG9_1082, as follows.

1. Modification to the signature generating/encrypting program PROG6_1019

Steps 705 and 707 of the signature generating/encrypting program PROG6_1019 shown in Fig. 9 are modified as follows.

(1) Step 705: r and s satisfying the following equations:

$$r = x + h(m)$$

$$s = k + eIJ \cdot r$$

are calculated.

(2) Step 707: s, r and (x', y') are outputted. In that case, instead of (x, s), (r, s) is used as the cardholder's signature.

2. Modification to the decrypting program PROG7_1080

Steps 802 and 803 of the signature generating/encrypting program PROG7_1080 shown in Fig. 10 are modified as follows.

(1) Step 802: The encrypted message m' 1144 and the digital signature (r, s) are taken in.
(2) Step 803: A point R on the elliptic curve satisfying:

$$R = s \cdot P + r \cdot Qc$$

is obtained.

3. Modification to the signature verifying program PROG9_1082

Steps 10002 and 10003 of the signature verifying program PROG9_1082 shown in Fig. 12 are modified as follows.

(1) Step 10002: The recovered message m 1025, r of the digital signature (r, s), and x as the x coordinate of R obtained in Step 803 are received from the decrypting program PROG7_1080.
(2) Step 10003: The hash value h(m) of the received message m 1025 is obtained, to calculate:

$$x'' = r - h.$$

An example will be described giving an example in which the private-key generating information for recovering the private key d is decentralizedly managed by a plurality of computers.
In the present example, the system is so constructed that the private key d can be recovered when, out of four IC cards, any three IC cards cooperate, or when one specific IC card and any one of the other IC cards cooperate.

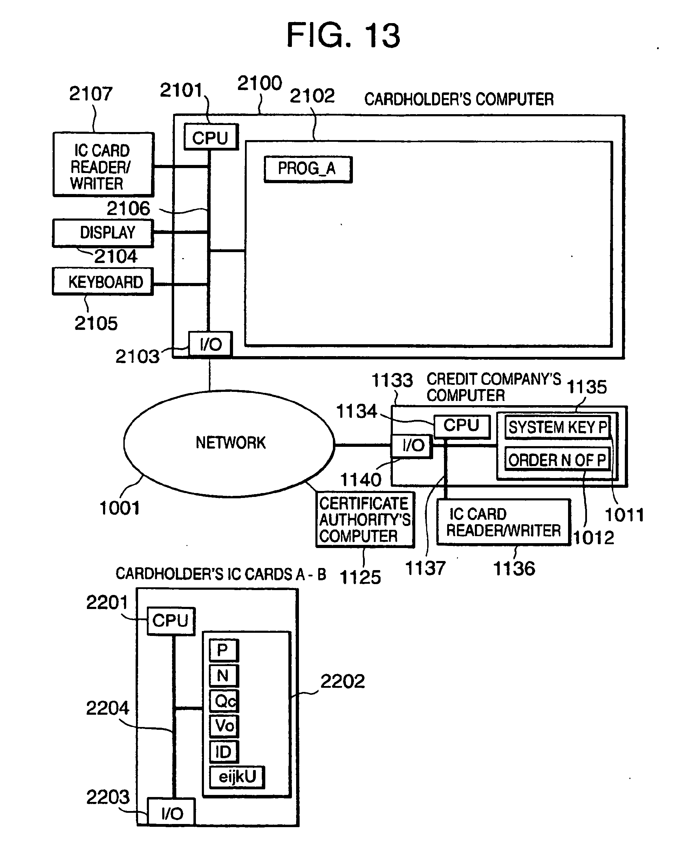

Fig. 13 is a schematic configuration of an example of a system.
In the present example, a cardholder's computer 2100 is so constructed that an ordinarily-constructed electronic computer comprising a CPU 2101, a memory 2102, an I/O 2103 functioning as an interface with the network 1001, a display 2104, and a keyboard 2105, each connected through a bus 2106, is further connected with an IC card reader/ writer 2107 through the bus 2106, for communicating with an IC card. Further, the memory 2102 stores a private-key generating program PROG_A for recovering the private key d.
Four IC cards A - D are ordinarily-constructed portable electronic computers, each comprising a CPU 2201, a memory 2202, and an I/O 2203 functioning as an interface with the cardholder's computer 2100, each connected through a bus 2204.
Now, in the system of the above-described construction, the credit company's computer 1133 makes the IC cards A - D store the private-key generating information for recovering the private key d, as follows.

(1) The order N 1012 of the system key P 1011 is read from its own memory 1135 to generate a random number d that is a natural number more than or equal to 1 and less than N. This number d is used as the private key.
(2) The system key P 1011 is read from the memory 1135, and Qc satisfying the following equation:

$$Qc = d \cdot P$$

is obtained. This Qc is sent, as the public key Qc for the private key d, to the certificate authority's computer 1125, to have it issue a public key certificate Vc.
(3) Private-key generating information $e_{ijk}U$ ($i \neq j \neq k$, U = i or j or k) satisfying the following equations:

$$d = e_{ABC}A + e_{ABC}B + e_{ABC}C$$

$$d = e_{BCD}B + e_{BCD}C + e_{BCD}D$$

is generated.
(4) For each of the four IC cards A - D, the system key P, the order N of the system key P, the public key Qc, the public key certificate Vc, the ID number (one of A - D), and all pieces of private-key generating information $e_{ijk}U$ whose part U corresponds to its own ID number are written into its memory 2202 through the IC card reader/writer 1136.

Thus, pieces of private-key generating information $e_{ijk}U$ written into each IC card A - D are as follows:

- the IC card A: $e_{ABC}A$, $e_{CDA}A$, and $e_{DAB}A$
- the IC card B: $e_{ABC}B$, $e_{BCD}B$, and $e_{DAB}B$
- the IC card C: $e_{ABC}C$, $e_{BCD}C$, and $e_{CDA}C$
- the IC card D: $e_{BCD}D$, $e_{CDA}D$, and $e_{DAB}D$

Further, pieces of private-key generating information $e_{ABC}C$, $e_{CDA}D$, and $e_{DAB}B$ are added to IC card A in order that the private key d can be recovered when the IC card A and any one of the other IC cards B - D cooperate.

(5) The IC cards A - D to which the prescribed information is written as described above are delivered to the cardholder, by mail or the like.

Now, the cardholder, to whom the IC cards A - D have been delivered from the credit company, distributes the IC cards A - D into four persons authorized to use the computer 2100, giving one card to each. At that time, a person, for example, in an administrative position is given the IC card A.

Next, there will be described recovery of the private key d in the cardholder's computer 2100, using the ID cards A - D delivered from the credit company as described above.

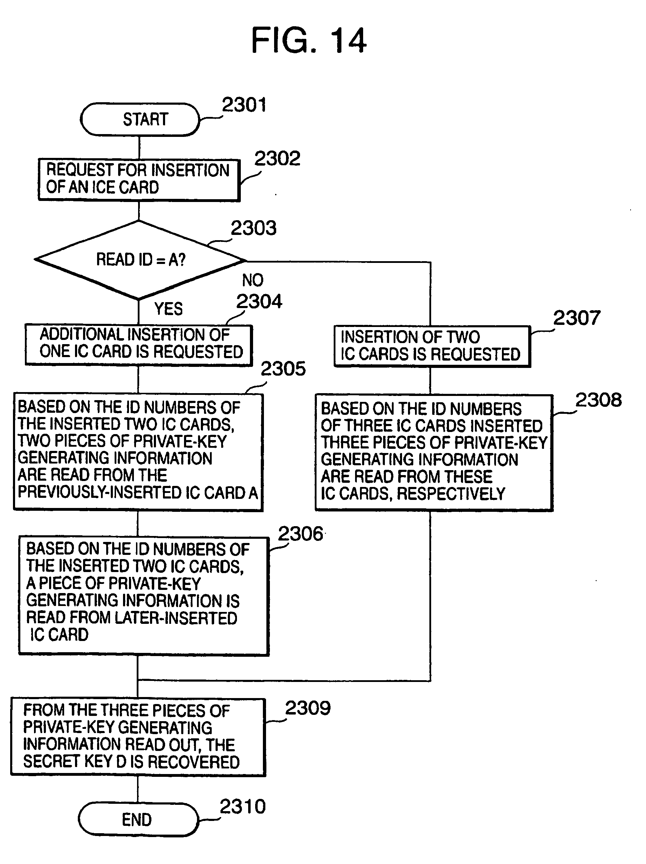

Fig. 14 is a flowchart for explaining the recovery processing of the private key d in the present example. This processing is started when an instruction to recover the private key d is inputted to the cardholder's computer 2100 through the keyboard 2105, and accordingly, the private-key generating program PROG_A is read from the memory 2102, to be executed by the CPU 2101.

(1) Step 2301: Start

(2) Step 2302: Through the display 2104, an instruction is given to a user to insert an IC card to the IC card reader/writer 2107. And, insertion of an IC card into the IC card reader/writer 2107 is awaited.

(3) Step 2303: The ID number is read from the inserted IC card. When, that ID number is A, the flow proceeds to Step 2304. Otherwise, the flow proceeds to Step 2307.

(4) Step 2304: Through the display 2104, an instruction is given to the user to additionally insert another IC card into the IC card reader/writer 2107. And, additional insertion of an IC card into the IC card reader/writer 2107 is awaited. By this, two IC cards are inserted into the IC card reader/writer 2107.

(5) Step 2305: The ID number is read from the additionally-inserted IC card. Referring to this ID number as F, from the previously-inserted ID card A, are read two pieces of private-key generating information $e_{ijk}A$ and $e_{ijk}U$, so that $e_{ijk}A$ includes A and F in the ijk part, and $e_{ijk}U$ coincides with $e_{ijk}A$ in the ijk part, while the U part not being F. For example, when the ID number F is B, $e_{ABC}A$ and $e_{ABC}D$ are read from the ID card A. Or, when the ID number F is C, $e_{CDA}A$ and $e_{CDA}D$ are read from the ID card A.

(6) Step 2306: From the additionally-inserted IC card, is read a piece of the private-key generating information $e_{ijk}U$ whose ijk part coincides with the two pieces of private-key generating information $e_{ijk}U$ previously read from the ID card A. For example, when the ID number F is B and $e_{ABC}A$ and $e_{ABC}C$ have been read from the ID card A, then $e_{ABC}B$ is read. Or, when the ID number F is C, and $e_{CDA}A$ and $e_{CDA}D$ have been read from the ID card A, then $e_{CDA}C$ is read.

(7) Step 2307: Through the display 2104, an instruction is given to the user to additionally insert two IC cards into the IC card reader/writer 2107. And insertion of two IC cards into the IC card reader/writer 2107 is awaited. By this, three IC cards are inserted into the IC card reader/writer 2107, in total.

(8) Step 2308: From the three IC cards inserted, their respective ID numbers are read. Then, from each inserted IC card, is read a piece of the private-key generating information $e_{ijk}U$ whose ijk part includes the three ID numbers read. For example, when the three ID numbers read are B, C and D, then, $e_{BCD}B$ is read from the IC card B, $e_{BCD}C$ from the IC card C, and $e_{BCD}D$ from the IC card D.

(9) Step 2309: The three pieces of private-key generating information $e_{ijk}U$ are added to recover the private key d.

(10) Step 2310: End

As described above, according to the present example, when any three IC cards cooperate out of the IC cards A - D, it is possible to recover the private key d. Further, when the IC card A exists, the private key d can be recovered by adding any one of the other IC cards. Thus, it is possible to weight the IC cards in accordance with authorities of the users, so that the number of the IC cards required to cooperate for recovering the private key d varies.

In the present example, there has been described the system that is so constructed that the private key d can be recovered when, out of four IC cards, any three IC cards cooperate, or when one specific card and any one of the other cards cooperate. However, the present invention is not limited to this. For example, k pieces of private-key generating information $u_1 - u_k$ satisfying $d = f(u_1, u_2, ..., u_k)$ are distributed into and retained by k computers out of n computers, and, at the same time, those k pieces of private-key generating information are distributed into and retained by m (m < k) computers out of the n computers, those m computers being different in combination from the above-mentioned k computers. By this, it is possible to weight the computers in accordance with authorities of the users of those computers, so that the number of the computers required to cooperate for recovering the private key d varies.

Further, in the present example, the private-key generating information for recovering the private key d is generated in the computer 1133 of the credit company (reliable third party) being the card issuer, and stored into the IC cards A - D, to be delivered to the cardholder. However, the present invention is not limited to this. For example, similarly to the above-described embodiment, the IC cards A - D may cooperate with one another to generate the private-key generating information for recovering the private key.

For example, first, among the IC card A - D, such pieces of private-key generating information $e_{ijk}U$ are generated that the private key d can be recovered when any three pieces exist, and each IC card stores the corresponding pieces of private-key generating information $e_{ijk}U$. Accordingly, pieces of private-key generating information $e_{ijk}U$ stored into each IC card A - D become as follows.

- the IC card A: $e_{ABC}A$, $e_{CDA}A$, and $e_{DAB}A$
- the IC card B: $e_{ABC}B$, $e_{BCD}B$, and $e_{DAB}B$
- the IC card C: $e_{ABC}C$, $e_{BCD}C$, and $e_{CDA}C$
- the IC card D: $e_{BCD}D$, $e_{CDA}D$, and $e_{DAB}D$

Next, the IC card A can perform ciphered communication with the IC cards B - D through the cardholder's computer 2100 to obtain such pieces of private-key generating information $e_{ABC}C$, $e_{CDA}D$, and $e_{DAB}B$ from the IC cards B - D, that the private key d can be recovered when the IC card A and any one of the other IC cards B - D exist.

Further, it is also possible to generate a digital signature on a message, using the pieces of private-key generating information distributed into and retained by the computers according to the present embodiment. For example, the following processing may be performed, in order that the IC card A cooperates with the IC card B to generate a digital signature.

1. Processing in the IC card A

(1) By making the private-key generating information $e_{ABC}A$ act on a message m received from the computer 2100, a partial signature $a_1$ on the message m is generated.
(2) Similarly, by making the private-key generating information $e_{ABC}C$ act on the message m received from the computer 2100, a partial signature $a_2$ on the message m is generated.

2. Processing in the IC card B

By making the private-key generating information $e_{ABC}B$ act on the message m received from the computer 2100, a partial signature $a_3$ on the message m is generated.

3. Processing in the cardholder's computer 2100

Using the partial signatures $a_1$ and $a_2$ generated in the IC card A and the partial signature $a_3$ generated in the IC card B, a digital signature A on the message m using the private key d is generated.

The method of weighting authorities, disclosed in the present example can be applied to the method of threshold digital signature described in the Embodiment. By way of example, there will be described a case in which, for generating a signature, IC cards A- C and a PC are so set (key generation) that a correct signature can be generated either when one PC and one IC card, i.e., two devices in total, can be used or when the three IC cards A, B and C exist.

It is assumed that each of the IC cards A, B and C, three in total, and one PC is provided with a function of performing secret communication between any two devices of them, via the PC. For example, as exemplified in First Embodiment, that function may be realized by delivering data encrypted by the common key cryptography, that delivery being performed via the PC.

Each device's retention of the private-key generating information for generating a signature and the output process of the public key for verification of a signature in the First Embodiment are replaced by the following processing performed by the IC cards and the PC, four devices in total, in the present embodiment.

First, the IC card A generates a quartic expression f1(x) at random, the IC card B a quartic expression f2(x) at random, the IC card C a quartic expression f3(x) at random, and the PC two quartic expressions f4(x) and f5(x) at random.

Next, the IC card A calculates f1(2) to send it to the IC card B by secret communication; calculates f1(3) to send it to the IC card C by secret communication; calculates f1(4) and f1(5) to send them to the PC by secret communication; and calculates a point on the elliptic curve, f1(0)P, to output it to the other devices than itself.

The IC card B calculates f2(1) to send it to the IC card A by secret communication; calculates f2(3) to send it to the IC card C by secret communication; calculates f2(4) and f2(5) to send them to the PC by secret communication; and calculates a point on the elliptic curve, f2(0)P, to output it to the other devices than itself.

The IC card C calculates f3(1) to send it to the IC card A by secret communication; calculates f3(2) to send it to the IC card B by secret communication; calculates f3(4) and f3(5) to send them to the PC by secret communication; and calculates a point on the elliptic curve, f3(0)P, to output it to the other devices than itself.

The PC calculates f4(1) and f5(1) to send them to the IC card A by secret communication; calculates f4(2) and f5(2) to send it to the IC card B by secret communication; calculates f4(3) and f5(3) to send them to the IC card C by secret communication; and calculates points on the elliptic curve, f4(0)P and f5(0)P, to output them to the other devices than itself.

Next, the IC card A calculates $\alpha A = (f1(1) + f2(1) + f3(1) + f4(1) + f5(1))$ (mod N). Then, it retains eABC = $(3\alpha A)$ (mod N) in the card, as the private-key generating information to be used to generate a signature in cooperation with the IC card B and the IC card C, and on the other hand, retains eADE = $(5/3\alpha A)$ (mod N) in the card, as the private-key generating information to be used to generate a signature in cooperation with the PC.

The IC card B calculates f3(2) + f4(2) + f5(2). Then, it retains eBAC = $(-3\alpha B)$ in the card, as the private-key generating information to be used to generate a signature in cooperation with the IC card A and the IC card C, and on the other hand, retains eBDE = $(10/3\alpha B)$ (mod N) in the card, as the private-key generating information to be used to generate a signature in cooperation with the PC.

The IC card C calculates $\alpha C = f1(3) + f2(3) + f3(3) + f4(3) + f5(3)$. Then, it retains eCAB = $(\alpha C)$ (mod N) in the card, as the private-key generating information to be used to generate a signature in cooperation with the IC card A and the IC card B, and on the other hand, retains eCDE = $(10\alpha A)$ (mod N) in the card, as the private-key generating information to be used to generate a signature in cooperation with the PC.

The PC calculates $\alpha D = f1(4) + f2(4) + f3(4) + f4(4) + f5(4)$ and $\alpha E = f1(5) + f2(5) + f3(5) + f4(5) + f5(5)$. Then, it retains eDEA = $(-5/3\alpha D + \alpha E)$ (mod N) in the PC, as the private-key generating information to be used to generate a signature in cooperation with the IC card A, retains eDEB = $(-5/3\alpha D + 8/\alpha E)$ (mod N) in the PC, as the private-key generating information to be used to generate a signature in cooperation with the IC card B, and retains eDEC = $(-15\alpha D + 6\alpha E)$ (mod N) in the PC, as the private-key generating information to be used to generate a signature in cooperation with the IC card C. Further, a point on the elliptic curve, f1(0)P + f2(0)P + f3(0)P + f4(0)P + f5(0)P is used as a corresponding public key Q.

According to the above-described processing, it is possible without a reliable manager to set the pieces of private-key generating information into the IC cards and the PC so that a correct signature can be generated either when the PC and any one IC card, i.e., two devices in total, can be used, or when the three IC cards, i.e., the IC cards A, B and C, exist.

In the above-described example, the PC performs the processing corresponding to two IC cards, i.e., generates two quartic expressions at random. By that, it becomes possible that one PC has authority corresponding to two IC cards.

Also at the stage of generating a signature, similarly it is possible that the PC performs the processing corresponding to two IC cards, to generate a correct signature. At that time, even in the present embodiment including the weighting of authorities, the process of generating a signature can be similar to First Embodiment, and, thereby, is efficient. Namely, in the present embodiment, although one PC has the authority corresponding to two IC cards, the PC needs to perform the random number generating process not twice but once in the signature generating process.

The above-described example is modified to obtain the present example. Namely, in the present example, out of the pieces of private-key generating information $e_{ijk}U$ owned by each of the IC cards A - D, one piece is further divided into plurality pieces of information $u'_1 - u'_j$, to make other IC cards manage them decentralizedly. Here, as the method of making other IC cards manage the private-key generating information $e_{ijk}U$, the method of decentralizedly managing the private key d, described in the above example, may be applied.

According to present example, the IC cards, which own the pieces of information $u'_1 - u'_j$, cooperates with each other to recover the abovementioned one piece of private-key generating information $e_{ijk}U$, and then, cooperate with suitable two IC cards (IC cards having ID numbers different from U of the recovered private-key generating information $e_{ijk}U$) out of the IC cards A - D, to generate the private key d. Thus, it is possible to perform the weighting so that the number of computers required to cooperate for recovering the secret information d varies depending on the authorities of the computers or users of those computers.

The present example is obtained by modifying the above-described example so that, when the credit company issues the IC cards A - D, the credit company writes the private-key generating information $e_{ijk}U$ into the IC cards, while adding an error detecting code such as a parity check to each piece of information $e_{ijk}U$. The cardholder's computer 2100 is used to detect an error of the private-key generating information $e_{ijk}U$ written into each IC card.

Namely, in Step 2309 of the flow shown in Fig. 14, errors of the three pieces of private-key generating information $e_{ijk}U$ read out are examined by using the error detecting codes added to those pieces. Only when no error exists in all the three pieces of private-key generating information $e_{ijk}U$ read out, these pieces of information are added to recover the private key d. On the other hand, when an error is detected in the three pieces of private-key generating information $e_{ijk}U$ read out, the number of pieces of private-key generating information $e_{ijk}U$ in which errors are detected is stored into the memory 2102, and the display 2104 is made to display a message to the effect that the private key d can not be recovered. At this, the total number stored in the memory 2102, i.e., the number of the pieces of private-key generating information $e_{ijk}U$ in which errors are detected, may exceed a prescribed threshold. In that case, the credit company is requested to reissue the IC cards (i.e., to update the secret information d) through the display 2104. That threshold is set so that (the total number of the pieces of private-key generating information $e_{ijk}U$ - threshold) is at least larger than the least number (three in the present embodiment) of the pieces of private-key generating information $e_{ijk}U$ required for recovering the private key d. As a result of this, it is possible to decentralizedly manage the secret information not to produce a period in which generation of a digital signature or a private key can not be performed.

In the present example, the private-key generating information for recovering the private key d is generated in the computer 1133 of the credit company (a reliable third party) being the card issuer, and stored into the IC cards A - D, adding error detecting codes such as parity checks, to be delivered to the cardholder. However, the present invention is not limited to this. Similarly to the above-described Embodiment, the IC cards A - D may cooperate with each other to generate the private-key generating information for recovering the private key d. In that case, as described in the additional note to the description of the operation of the signature generating/encrypting program in the above Embodiment, the signature generating/encrypting program may be modified so that it is possible to confirm that each computer (IC card) involved in generating a signature is operating correctly. As a result of this modification, by counting the number of the computers that does not operate correctly, it is possible to decide a time to request the credit company to reissue the IC cards (i.e., to update the secret information d), without using an error detecting code such as a parity check.

Hereinabove, the various examples have been described.

In the above-described examples, by way of example, there has been described the case in which the present invention is applied to a message used in electronic commerce. However, the present invention is not limited to this, and can be applied to all types of digitized multimedia data such as documents other than the message described above, animations, still pictures, photographs, sound data (music and voice), and the like.

Further, the above examples have been described taking the example in which the present invention is applied to a digital signature, encryption and decryption performed between a cardholder and a merchant in electronic commerce. However, the present invention is not limited to this, and can be applied to digital signature, encryption and decryption in various fields of use.

Further, the above examples have been described taking the example in which decentralized management of a key is performed by a computer and IC cards connected locally to that computer, or by IC cards. The present invention, however, is not limited to this, and can be applied to a case in which the decentralized management is performed by computers connected to each other through a network.

Further, it is possible to mount a plurality of micro electronic circuit chips on a sheet of, for example, paper, and to make these chips perform decentralized management of a key. In that case, it is possible to construct a system so that, when more than a predetermined number of these chips operate, recovery of the key or signature can be performed.

Further, the above examples utilize an elliptic curve on a finite field whose order is a prime. However, an elliptic curve on a finite field whose characteristic is 2 may be used. Or, other than these, an elliptic curve on any finite field may be used. Further, the above embodiments use the elliptic curve defined by the expression $y^2 = x^3 + ax + b$. However, an elliptic curve defined by another expression, for example, $by^2 = x^3 + ax^2 + bx$ may be used. Further, the above embodiments use encryption and digital signature that utilize the difficulty of the discrete logarithm problem on a group generated by rational points on an elliptic curve. However, it is possible to use encryption and digital signature utilizing the difficulty of the discrete logarithm problem on another group such as a multiplicative group of a finite field, a jacobian group on a hyperelliptic curve, a jacobian group on a Cab curve, or the like.

Further, the above examples have been described taking the example in which each process is realized by the software technique using a program. However, hardware may be used to realize each process.

As described above, according to the present invention, it is possible to provide a digital signature technique and decentralized key management system that can used more conveniently.

While the present invention has been described in detail and pictorially in the accompanying drawings, it is not limited to such details, since many changes and modifications recognizable to those of ordinary skill in the art may be made to the invention without departing from the scope thereof.

**Claims**

1. A method of generating a digital signature, for generating a digital signature A that uses a private key d for a message M, wherein the method is performed by k computers without secret communication between them and wherein:

   k pieces of numerical information $u_1$ - $u_k$ satisfying $d = f1(u_1, u_2, ... , u_k)$ are distributed into and retained by said k computers;
   with regard to each computer of said k computers, a piece of the numerical information $u_i$ ($1 \le i \le k$) retained by the computer, a random number $s_i$ generated by said computer, and information obtained from pieces of numerical information generated respectively by the other computers, are made to act on the message M, by said computer, to generate a partial signature $a_i$ on the message M; and
   partial signatures $a_1$ - $a_k$ generated respectively by said k computers are used to generate the digital signature A that uses the private key d for the message M.

2. The method of generating a digital signature according to Claim 1, wherein:

   the k pieces of numerical information $u_1$ - $u_k$ satisfying $d = f1(u1, u2,..., u_k)$ are distributed to and retained by each of at least two groups of k computers, said groups being different from each other in combination;
   with regard to each computer of the k computers of each group, a piece of numerical information $u_i$ ($1 \le i \le k$) retained by the computer, a random number $s_i$ generated by the computer, and information obtained from pieces of numerical information generated respectively by the other computers, which belong to the same group as the computer, are made to act on the message M to generate the partial signature $a_i$ on the message M, by the computer; and
   the partial signatures $a_1$ - $a_k$ generated by the k computers belonging to a same group are used to generate the digital signature A that uses the private key d for the message M.

3. The method of generating a digital signature according to Claim 1, wherein:

   j pieces of numerical information $u'_1$ - $u'_j$ satisfying $d = f2(u'_1, u'_2, ... , u'_j)$ are distributed to and retained by j computers different in combination from said k computers;
   with regard to each computer of said j computers, a piece of numerical information $u'_i$ ($1 \le i \le j$) retained by the computer, a random number $s_i$ generated by the computer, and information obtained from pieces of numerical information generated respectively by the j-1 other computers, are made to act on the message M, by the computer, to generate a partial signature $a'_i$; and
   the partial signatures $a'_1$ - $a'_j$ generated by said j computers are used to generate the digital signature A that uses the private key d for the message M.

4. The method of generating a digital signature according to Claim 1, wherein:

   said k pieces of numerical information $u_1$ - $u_k$ satisfying $d = f1 (u_1, u_2, ... , u_k)$ are generated by a computer that is different from said k computers that retain said k pieces of numerical information distributed into those k computers.

5. The method of generating a digital signature according to Claim 1, wherein:

   said k pieces of numerical information $u_1$ - $u_k$ satisfying $d = f1(u_1, u_2,..., u_k)$ are generated by said k computers in cooperation with each other, said k computers retaining said k pieces of numerical information distributed to said k computers.

6. The method according to Claim 1, wherein:

   the random number $s_i$ is information that can not reproduce said private key d by using the message M, a public key Q pairing with the private key d, and the digital signature A, even if the random number $s_i$ is made public to others except for the computers of the group to which the computer that generated the random number $s_i$ belongs.

7. A system of generating a digital signature, in which k computers 1 - k are used to generate a digital signature A that uses a private key d for a message M, without secret communication between said computers, wherein:

a computer i ($1 \leq i \leq k$) is adapted to retain one piece of numerical information $u_i$ out of k pieces of numerical information $u_1$ - $u_k$ satisfying $d = f1(u_1, u_2, ... , u_k)$, and has means for generating a partial signature $a_i$ on the message M, with the piece of numerical information $u_i$ owned by said computer a random number $s_i$ generated by said computer, and information obtained from pieces of numerical information generated respectively by the other computers and for making them act on the message M to generate a partial signature $a_i$; and

said k computers 1 to k are adapted to cooperate with each other in using partial signatures $a_i$ - $a_k$ generated respectively in the computers 1 to k, to generate the digital signature A that uses the private key d for the message M.

## Patentansprüche

1.  Verfahren zum Erzeugen einer digitalen Signatur, um eine digitale Signatur A, die einen privaten Schlüssel d für eine Nachricht M verwendet, zu erzeugen, wobei das Verfahren von k Computern ohne geheime Kommunikation zwischen ihnen durchgeführt wird und wobei:

    k Teile von numerischen Informationen $u_1$ - $u_k$, die $d = f1(u_1, u_2, ..., u_k)$ erfüllen, an die k Computer verteilt und von diesen gehalten werden;

    bezüglich jedes der k Computer ein Teil der vom Computer gehaltenen numerischen Informationen ui ($1 \leq$ in $\leq k$), eine vom Computer erzeugte Zufallszahl si sowie Informationen, die aus Teilen von numerischen Informationen, die jeweils von den anderen Computern erzeugt worden sind, erhalten worden sind, auf die Nachricht M vom Computer wirken gelassen werden, um eine teilweise Signatur $a_i$ auf der Nachricht M zu erzeugen; und teilweise Signaturen $a_1$ - $a_k$, die jeweils von den k Computern erzeugt worden sind, verwendet werden, um die digitale Signatur A zu erzeugen, die den privaten Schlüssel d für die Nachricht M verwendet.

2.  Verfahren zum Erzeugen einer digitalen Signatur nach Anspruch 1, wobei

    die k Teile von numerischen Informationen $u_1$ - $u_k$, die $d = f1 (u_1, u_2, ..., u_k)$ erfüllen, an jeden aus mindestens zwei Gruppen von k Computern verteilt und darin gehalten werden, wobei die Gruppen voneinander in Kombination verschieden sind;

    bezüglich jedes der k Computer jeder Gruppe ein Teil von vom Computer gehaltenen numerischen Informationen $u_i$ ($1 \leq i \leq k$), eine vom Computer erzeugte Zufallszahl $s_i$ sowie Informationen, die aus Teilen von numerischen Informationen, die jeweils von den anderen Computern, die zur selben Gruppe wie der Computer gehören, erzeugt worden sind, erhalten worden sind, auf die Nachricht M wirken gelassen werden, um die teilweise Signatur $a_i$ auf der Nachricht M durch den Computer zu erzeugen; und

    die teilweisen Signaturen $a_1$ - $a_k$, die von den zur selben Gruppe gehörenden k Computern erzeugt worden sind, verwendet werden, um die digitale Signatur A zu erzeugen, die den privaten Schlüssel d für die Nachricht M verwendet.

3.  Verfahren zum Erzeugen einer digitalen Signatur nach Anspruch 1, wobei:

    j Teile von numerischen Informationen $u'_1$ - $u'_j$, die $d = f2(u'_1, u'_2, ..., u'_j)$ erfüllen, an j Computer, die in Kombination von den k Computern verschieden sind, verteilt und von diesen gehalten werden;

    bezüglich jedes der j Computer ein Teil von vom Computer gehaltenen numerischen Informationen $u'_i$ ($1 \leq i \leq j$), eine vom Computer erzeugte Zufallszahl si sowie Informationen, die aus Teilen von jeweils von den j-1 anderen Computern erzeugten numerischen Informationen erhalten worden sind, auf die Nachricht M durch den Computer wirken gelassen werden, um eine teilweise Signatur $a'_i$ zu erzeugen; und

    die teilweisen Signaturen $a'_1$ - $a'_j$, die von den j Computern erzeugt worden sind, verwendet werden, um die digitale Signatur A, die den privaten Schlüssel d für die Nachricht M verwendet, zu erzeugen.

4.  Verfahren zum Erzeugen einer digitalen Signatur nach Anspruch 1, wobei:

    die k Teile von numerischen Informationen $u_1$ - $u_k$, die $d = f1(u_1, u_2, ..., u_k)$ erfüllen, von einem Computer erzeugt werden, der von den k Computern verschieden ist, die die k Teile von an die k Computer verteilten numerischen Informationen halten.

5.  Verfahren zum Erzeugen einer digitalen Signatur nach Anspruch 1, wobei:

die k Teile von numerischen Informationen $u_1$ - $u_k$, die d = f1($u_1$, $u_2$, ..., $u_k$) erfüllen, von den k Computern in Kooperation miteinander erzeugt werden, wobei die k Computer die k Teile von numerischen Informationen, die an die k Computer verteilt worden sind, halten.

6. Verfahren nach Anspruch 1, wobei:

die Zufallszahl $s_i$ Information darstellt, die den privaten Schlüssel d unter Verwendung der Nachricht M, eines öffentlichen Schlüssels Q, der ein Paar mit dem privaten Schlüssel d bildet, und der digitalen Signatur A nicht reproduzieren kann, selbst wenn die Zufallszahl $s_i$ für andere außer für die Computer der Gruppe, zu der der Computer gehört, der die Zufallszahl si erzeugt hat, öffentlich gemacht wird.

7. System zum Erzeugen einer digitalen Signatur, in der k Computer 1 - k verwendet werden, um eine digitale Signatur A, die einen privaten Schlüssel d für eine Nachricht M verwendet, ohne geheime Kommunikation zwischen den Computern zu erzeugen, wobei:

ein Computer i (1 ≤ i ≤ k) dazu ausgelegt ist, ein Teil von numerischen Informationen $u_i$ aus k Teilen von numerischen Informationen $u_1$ - $u_k$, die d = f1($u_1$, $u_2$, ... $u_k$) erfüllen, zu halten, und eine Einrichtung zum Erzeugen einer teilweisen Signatur $a_i$ auf der Nachricht M, wobei der Teil von numerischen Informationen $u_i$ dem Computer gehört, eine Zufallszahl si vom Computer erzeugt worden ist sowie Informationen aus Teilen von jeweils von den anderen Computern erzeugten numerischen Informationen erhalten worden sind, und zum Wirkenlassen auf diesen auf die Nachricht M aufweist, um eine teilweise Signatur $a_i$ zu erzeugen; und
die k Computer 1 bis k dazu ausgelegt sind, miteinander beim Verwenden der jeweils in den Computern 1 bis k erzeugten teilweisen Signaturen $a_i$ - $a_k$ miteinander zu kooperieren, um die digitale Signatur A, die den privaten Schlüssel d für die Nachricht M verwendet, zu erzeugen.

**Revendications**

1. Procédé de génération d'une signature numérique, pour générer une signature numérique A qui utilise une clé privée d pour un message M, dans lequel le procédé est mis en oeuvre par k ordinateurs sans communication secrète entre eux et dans lequel :

les k éléments d'informations numériques $u_1$ - $u_k$ satisfaisant à d = f1 ($u_1$, $u_2$, ... , $u_k$) sont distribués dans k ordinateurs et conservés par ceux-ci,
concernant chaque ordinateur parmi lesdits k ordinateurs, un élément des informations numériques $u_1$ (1 ≤ i ≤ k) conservé par l'ordinateur, un nombre aléatoire $s_i$ généré par ledit ordinateur, et des informations obtenues à partir des éléments d'informations numériques générés respectivement par les autres ordinateurs, sont amenés à agir sur le message M, par l'intermédiaire dudit ordinateur, afin de générer une signature partielle $a_i$ sur le message M, et
des signatures partielles $a_1$ - $a_k$ générées respectivement par lesdits k ordinateurs sont utilisées pour générer la signature numérique A qui utilise la clé privée d pour le message M.

2. Procédé de génération d'une signature numérique selon la revendication 1, dans lequel ;

les k éléments d'informations numériques $u_1$ - $u_k$ satisfaisant à d = f1 ($u_1$, $u_2$, ..., $u_k$) sont distribués dans chacun des au moins deux groupes de k ordinateurs et conservés par ceux-ci, lesdits groupes étant différents les uns des autres en termes de combinaison,
concernant chaque ordinateur des k ordinateurs, de chaque groupe, un élément d'informations numériques $u_1$ (1 ≤ i ≤ k) conservé par l'ordinateur, un nombre aléatoire $s_i$ généré par l'ordinateur, et des informations obtenues à partir des éléments d'informations numériques générés respectivement par les autres ordinateurs, lesquels appartiennent au même groupe que l'ordinateur, sont amenés à agir sur le message M afin de générer la signature partielle $a_i$ sur le message M, par l'intermédiaire dudit l'ordinateur, et
les signatures partielles $a_1$ - $a_k$ générées par les k ordinateurs appartenant à un même groupe sont utilisées pour générer la signature numérique A qui utilise la clé privée d pour le message M.

3. Procédé de génération d'une signature numérique selon la revendication 1, dans lequel :

j éléments d'informations numériques $u'_1$ - $u'_j$ satisfaisant à d = f2 ($u'_1$, $u'_2$, ..., $u'_j$) sont distribués dans j ordinateurs, différents en termes de combinaison desdits k ordinateurs, et conservés par ceux-ci,

concernant chaque ordinateur desdits j ordinateurs, un élément d'informations numériques u'$_1$ (1 $\leq$ i $\leq$ k) conservé par l'ordinateur, un nombre aléatoire si généré par l'ordinateur, et des informations obtenues à partir des éléments d'informations numériques générés respectivement par les j-1 autres ordinateurs, sont amenés à agir sur le message M, par l'intermédiaire de l'ordinateur, afin de générer une signature partielle a'$_i$, et

les signatures partielles a'$_1$ - a'$_j$ générées par lesdits j ordinateurs sont utilisées pour générer la signature numérique A qui utilise la clé privée d pour le message M.

**4.** Procédé de génération d'une signature numérique selon la revendication 1, dans lequel :

lesdits k éléments d'informations numériques u$_1$ - u$_k$ satisfaisant à d = f1 (u$_1$, u$_2$, ... , u$_k$) sont générés par un ordinateur qui est différent desdits k ordinateurs qui conservent lesdits k éléments d'informations numériques distribués dans ces k ordinateurs.

**5.** Procédé de génération d'une signature numérique selon la revendication 1, dans lequel :

lesdits k éléments d'informations numériques u$_1$ - u$_k$ satisfaisant à d = f1 (u$_1$, u$_2$, ..., u$_k$) sont générés par lesdits k ordinateurs en coopération entre eux, lesdits k ordinateurs conservant lesdits k éléments d'informations numériques distribués dans lesdits k ordinateurs.

**6.** Procédé selon la revendication 1, dans lequel :

le nombre aléatoire si est constitué d'informations que ne peut pas reproduire ladite clé privée d en utilisant le message M, une clé publique Q s'accouplant avec la clé privée d, et la signature numérique A, même si le nombre aléatoire s$_i$ est rendu public à d'autres ordinateurs à l'exception des ordinateurs du groupe auquel l'ordinateur qui a généré le nombre aléatoire si appartient.

**7.** Système de génération d'une signature numérique, dans lequel k ordinateurs 1 - k sont utilisés pour générer une signature numérique A qui utilise une clé privée d pour un message M, sans communication secrète entre lesdits ordinateurs, dans lequel ;

un ordinateur i (1 $\leq$ i $\leq$ k) est adapté pour conserver un élément d'informations numériques u$_i$ parmi k éléments d'informations numériques u$_1$ - u$_k$ satisfaisant à d = f1 (u$_1$, u$_2$, ... , u$_k$) , et a des moyens pour générer une signature partielle a$_i$ sur le message M, avec l'élément d'informations numériques u$_1$ détenu par ledit ordinateur, un nombre aléatoire s$_i$ généré par ledit ordinateur, et des informations obtenues à partir d'éléments d'informations numériques générés respectivement par les autres ordinateurs et pour amener ceux-ci à agir sur le message M afin de générer une signature partielle a$_i$, et

lesdits k ordinateurs 1 à k sont adaptés pour coopérer entre eux en utilisant des signatures partielles a$_i$ - a$_k$ générées respectivement dans les ordinateurs 1 à k, afin de générer la signature numérique A qui utilise la clé privée d pour le message M.

# FIG. 1

# FIG. 2

EP 0 998 074 B1

## CARDHOLDER'S IC CARD A

| | |
|---|---|
| COMMON KEY C_AC | 1009 |
| COMMON KEY C_AB | 1032 |
| SYSTEM KEY P | 1011 |
| ORDER N OF P | 1012 |
| ID A | 1035 |
| PROG2 | 1015 |
| PROG3 | 1016 |
| PROG5 | 1018 |
| PROG6 | 1019 |
| PRIVATE-KEY GENERATING INFORMATION eAB | 1040 |
| PRIVATE-KEY GENERATING INFORMATION eAC | 1041 |
| PUBLIC KEY Qc | 1022 |
| PUBLIC KEY CERTIFICATE Vc | 1023 |

CPU 1028
1027
1029
I/O
1030
1044

## CARDHOLDER'S IC CARD B

| | |
|---|---|
| COMMON KEY C_AB | 1032 |
| COMMON KEY C_BC | 1010 |
| SYSTEM KEY P | 1011 |
| ORDER N OF P | 1012 |
| ID B | 1053 |
| PROG2 | 1015 |
| PROG3 | 1016 |
| PROG5 | 1018 |
| PROG6 | 1019 |
| PRIVATE-KEY GENERATING INFORMATION eBA | 1060 |
| PRIVATE-KEY GENERATING INFORMATION eBC | 1061 |
| PUBLIC KEY Qc | 1022 |
| PUBLIC KEY CERTIFICATE Vc | 1023 |

CPU 1046
1045
1047
I/O
1048
1064

# FIG. 3

EP 0 998 074 B1

# FIG. 4

START — 201

COMPUTER ITSELF IS MADE TO EXECUTE PROG2
AND RECEIPT OF ITS OUTPUT cCA, cCB IS AWAITED — 202

IC CARD A IS MADE TO EXECUTE PROG2
AND RECEIPT OF ITS OUTPUT cAB, cAC IS AWAITED — 203

IC CARD B IS MADE TO EXECUTE PROG2
AND RECEIPT OF ITS OUTPUT cBA, cBC IS AWAITED — 204

COMPUTER ITSELF IS MADE TO EXECUTE PROG3 HAVING cBC,
cAC AS INPUT AND RECEIPT OF ITS OUTPUT Q3 IS AWAITED — 205

IC CARD A IS MADE TO EXECUTE PROG3 HAVING cBA, cCA
AS INPUT AND RECEIPT OF ITS OUTPUT Q1 IS AWAITED — 206

IC CARD B IS MADE TO EXECUTE PROG3 HAVING cAB,
cCB AS INPUT AND RECEIPT OF ITS OUTPUT Q2 IS AWAITED — 207

ADDITION QC = Q1 + Q2 + Q3 ON THE ELLIPSE IS PERFORMED — 208

Qc IS SENT TO CERTIFICATE AUTHORITY, AND PUBLIC KEY
CERTIFICATE Vc FOR Qc IS RECEIVED — 209

Qc AND Vc ARE STORED INTO MEMORIES OF COMPUTER,
IC CARD A, AND IC CARD B — 210

END — 211

# FIG. 5

START — 301

ITS OWN ID IS SET AS D — 302

$fD(X) = aDX + bD$ IS GENERATED — 303

$\alpha DA=fD(1)$, $\alpha DB=fD(2)$ AND $\alpha DC=fD(3)$ ARE CALCULATED — 304

D=? — 305

A

B

C

306
$\alpha DB$, $\alpha DC$ ARE SUBJECTED TO COMMON KEY ENCRYPTION USING KEYS C_AB, C_AC, RESPECTIVELY AND OUTPUTTED. $\alpha DA$ IS STORED INTO MEMORY

307
$\alpha DA$, $\alpha DC$ ARE SUBJECTED TO COMMON KEY ENCRYPTION USING KEYS C_AB, C_BC, RESPECTIVELY AND OUTPUTTED. $\alpha DB$ IS STORED INTO MEMORY

308
$\alpha DA$, $\alpha DB$ ARE SUBJECTED TO COMMON KEY ENCRYPTION USING KEYS C_AC, C_BC, RESPECTIVELY AND OUTPUTTED. $\alpha DC$ IS STORED INTO MEMORY

bD IS STORED INTO MEMORY — 309

END — 310

# FIG. 6

START — 401

ITS OWN ID IS SET AS D — 402

D=? — 403

**A**

cBA, cCA ARE INPUTTED — 404

cBA, cCA ARE DECRYPTED USING KEYS C_AB, C_AC, RESPECTIVELY AND SET AS $\alpha$BA, $\alpha$CA. — 405

$\alpha$D=($\alpha$AA + $\alpha$BA + $\alpha$CA) (mod N) IS CALCULATED — 406

eAB = 2$\alpha$A (mod N) eAC = (3/2) $\alpha$A (mod N) ARE OUTPUTTED — 407

**B**

cAB, cCB ARE INPUTTED — 408

cAB, cCB ARE DECRYPTED USING KEYS C_AB, C_BC, RESPECTIVELY AND SET AS $\alpha$AB, $\alpha$CB. — 409

$\alpha$D=($\alpha$AB + $\alpha$BB + $\alpha$CB) (mod N) IS CALCULATED — 410

eBA = -$\alpha$B (mod N) eBC = 3$\alpha$B (mod N) ARE OUTPUTTED — 411

**C**

cAC, cBC ARE INPUTTED — 412

cAC, cBC ARE DECRYPTED USING KEYS C_AC, C_BC, RESPECTIVELY AND SET AS $\alpha$AC, $\alpha$BC. — 413

$\alpha$C=($\alpha$AC + $\alpha$BC + $\alpha$CC) (mod N) IS CALCULATED — 414

eCA = (-1/2) $\alpha$C (mod N) eCB = -2$\alpha$C (mod N) ARE OUTPUTTED — 415

QD = bDP IS CALCULATED AND OUTPUTTED — 416

END — 417

# FIG. 7

**501** START

**502** HASH VALUE h(m) IS CALCULATED

**503** IS PRIVATE-KEY GENERATING INFORMATION OF A SIGNATURE GENERATOR RETAINED IN PC ? — NOT RETAINED

RETAINED

**504** SET ID1 = C

**505** CAN IC CARD A BE INSERTED? — NO

YES

**506** HAS ID1 BEEN SET ALREADY? — YES

NO

**508** SET ID1 = A

**507** SET ID2 = A

**509** CAN IC CARD B BE INSERTED? — NO

YES

**510** HAS ID1 BEEN SET ALREADY? — NO

YES

**511** SET ID2 = B

**512** OUTPUTTED AS "SIGNATURE GENERATION FAILED"

END

**513** DEVICE OF ID1 IS MADE TO EXECUTE PROG5, AND A RETURN VALUE AS A POINT ON THE ELLIPSE IS SET AS R1

**514** DEVICE OF ID2 IS MADE TO EXECUTE PROG5, AND A RETURN VALUE AS A POINT ON THE ELLIPSE IS SET AS R2

**515** DEVICE OF ID1 IS MADE TO EXECUTE PROG6 HAVING HASH VALUE h(m), R2, NUMBER ID2, AND Qm AS INPUT, AND RETURN VALUES ARE SET AS s1, x, (x1', y1')

**516** DEVICE OF ID2 IS MADE TO EXECUTE PROG6 HAVING HAS VALUE h(m), R1, NUMBER ID1, AND Qm AS INPUT, AND RETURN VALUES ARE SET AS s2, x, (x2', y2')

**517** SET s = (s1 + s2) (mod N)

**518** SET (x', y') = (x1', y1') + (x2', y2')

**519** m IS SUBJECTED TO COMMON KEY CRYPTOGRAPHY USING x' AS A KEY, TO OBTAIN m'

**520** m', (x, s) ARE OUTPUTTED

**521** END

EP 0 998 074 B1

# FIG. 8

```
                        START                    601

                   GENERATION OF                 602
                   A RANDOM NUMBER k

                   R = kP IS CALCULATED           603

                     R IS OUTPUTTED               604

                     k IS RETAINED                605

                        END                      606
```

# FIG. 9

START — 701

ITS OWN ID IS SET AS I — 702

HASH VALUE h(m),
THE POINT R ON THE ELLIPSE,
NUMBER J, AND PUBLIC KEY
Qm ARE INPUTTED. — 703

$(x, y) = kP + R$ IS CALCULATED — 704

$s = eIJx + kh(m)$ IS CALCULATED — 705

$(x', y') = kQm$ IS CALCULATED — 706

k IS ERASED FROM MEMORY, AND
s, x AND (x', y') ARE OUTPUTTED — 707

END — 708

# FIG. 10

START — 801

ENCRYPTED MESSAGE m' AND A SIGNATURE x ARE INPUTTED — 802

A POINT R WHOSE x COORDINATE IS x IS OBTAINED — 803

IS PRIVATE-KEY GENERATING INFORMATION OF THE MERCHANT RETAINED IN PC? — 804
→ NOT RETAINED
↓ RETAINED — 805

SET ID1 = C' 

CAN IC CARD A' BE INSERTED? — 806
→ NO
↓ YES

HAS ID1 BEEN SET ALREADY? — 807
→ YES
↓ NO — 809

SET ID1 = A' — 809

SET ID2 = A' — 808

CAN IC CARD B' BE INSERTED? — 810
→ NO
↓ YES

HAS ID1 BEEN SET ALREADY? — 811
→ NO
↓ YES

OUTPUTTED AS "DECRYPTION FAILED" — 813

END

SET ID2 = B' — 812

DEVICE OF ID1 IS MADE TO EXECUTE PROG8, HAVING R, ID2 AS INPUT AND OUTPUT AS A POINT ON THE ELLIPSE IS SET AS T1 — 814

DEVICE OF ID2 IS MADE TO EXECUTE PROG8, HAVING R, ID1 AS INPUT AND OUTPUT AS A POINT ON THE ELLIPSE IS SET AS T2. — 815

(x', y') = T1 + T2 IS CALCULATED — 816

m' IS DECRYPTED BY COMMON KEY CRYPTOGRAPHY USING x' AS A KEY — 817

DECRYPTED MESSAGE m' IS OUTPUTTED — 818

END — 819

EP 0 998 074 B1

# FIG. 11

- 901 START
- 902 ITS OWN ID NUMBER IS SET AS I
- 903 THE POINT R ON THE ELLIPSE AND ID NUMBER J ARE INPUTTED
- 904 T = e'IJR IS CALCULATED
- 905 T IS OUTPUTTED
- 906 END

EP 0 998 074 B1

# FIG. 12

START — 10001

MESSAGE m AND SIGNATURE (x, s) ARE INPUTTED — 10002

$(x'', y'') = s^{-1}xP + s^{-1}h(m)Qc$ IS CALCULATED — 10003

$x''=x?$ — 10004

YES

NO

OUTPUTTED AS "NOT AUTHENTICATED" — 10005

OUTPUTTED AS "AUTHENTICATED" — 10006

END — 10007

51

# FIG. 13

2107　　2101　2100　2102　　CARDHOLDER'S COMPUTER

```
IC CARD
READER/
WRITER
```

**CPU**

PROG_A

2106

DISPLAY

2104

KEYBOARD

2105

2103　**I/O**

NETWORK

1001

1133　CREDIT COMPANY'S 1135
COMPUTER

1134

**I/O**　　**CPU**　　SYSTEM KEY P

ORDER N OF P

1140　　　　　　　　　　　1011

CERTIFICATE
AUTHORITY'S
COMPUTER

IC CARD
READER/WRITER

1012

CARDHOLDER'S IC CARDS A - B　1125　　1137　　1136

2201　　**CPU**

P
N
Qc
Vo
ID
eijkU

2202

2204

2203　**I/O**

# FIG. 14

START — 2301

REQUEST FOR INSERTION OF AN ICE CARD — 2302

READ ID = A? — 2303

NO — 2304

YES

ADDITIONAL INSERTION OF ONE IC CARD IS REQUESTED — 2304

INSERTION OF TWO IC CARDS IS REQUESTED — 2307

BASED ON THE ID NUMBERS OF THE INSERTED TWO IC CARDS, TWO PIECES OF PRIVATE-KEY GENERATING INFORMATION ARE READ FROM THE PREVIOUSLY-INSERTED IC CARD A — 2305

BASED ON THE ID NUMBERS OF THREE IC CARDS INSERTED THREE PIECES OF PRIVATE-KEY GENERATING INFORMATION ARE READ FROM THESE IC CARDS, RESPECTIVELY — 2308

BASED ON THE ID NUMBERS OF THE INSERTED TWO IC CARDS, A PIECE OF PRIVATE-KEY GENERATING INFORMATION IS READ FROM LATER-INSERTED IC CARD — 2306

FROM THE THREE PIECES OF PRIVATE-KEY GENERATING INFORMATION READ OUT, THE SECRET KEY D IS RECOVERED — 2309

END — 2310

53

**EP 0 998 074 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Standard Specifications For Public Key Cryptography (Draft Version 4). Standard. IEEE, 16 June 1998
- GOST 34.10 - A brief overview of Russia's DSA. **M. Michels ; D. Naccache ; H. Petersen.** Computers and Security. 1996, vol. 15, 725-732
- **C. Park ; K. Kurosawa.** New ElGamal Type Threshold Digital Signature Scheme. *IEICE Trans. Fundamentals,* January 1996, 86-93
- Applied Cryptography, Second Edition. **Bruce Schneier.** Inc. John Wiley & Sons, 1996